Europäisches Patentamt

European Patent Office

Office européen des brevets

(19)

(11) EP 1 313 319 A2

(12) EUROPEAN PATENT APPLICATION

(43) Date of publication:
21.05.2003 Bulletin 2003/21

(51) Int Cl.7: H04N 7/173, H04N 7/24

(21) Application number: 02017373.8

(22) Date of filing: 02.08.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 20.11.2001 JP 2001355272

(71) Applicant: Monolith Co., Ltd.
Tokyo 106-0045 (JP)

(72) Inventors:
• Akiyoshi, Kozo
Tokyo 106-0045 (JP)
• Akiyoshi, Nobuo
Tokyo 106-0045 (JP)

(74) Representative: Pfenning, Meinig & Partner
Mozartstrasse 17
80336 München (DE)

(54) **Advertisement displaying method and apparatus**

(57) The advertisement input unit (14) inputs key frames, and conditions of advertisement distribution. The information about the timing, which should display the frame with the key frame inputted, is also inputted. The inputted key frames and the inputted timing which should display are saved in the key frame storage (20). In the matching processor (18), the corresponding point information between key frames is generated, and it is stored at the corresponding point storage (22). The distribution controller (24) distributes the key frames and the corresponding point information via the advertisement transmitter (26) to the advertisement displaying apparatus (40) with reference to the operation situation and the timetable (28).

Fig.19

EP 1 313 319 A2

**Description**

This invention relates to an advertisement displaying technique, and it particularly relates to technique for distributing an advertisement to an advertisement displaying apparatus that locates in a remote place, and technique for displaying the advertisement.

The effectiveness of using motion picture for the advertisement has been well recognized. The motion picture in the advertisement has mainly been broadcasted to the television. It is not easy in respect of expense to secure the broadcast time for the advertisement and to produce the advertisement. Recently, the advertisement using the motion picture is increasingly seen on the Internet. It is, however, not practical to spare many data or space for the advertisement, such as the motion picture in respect of the transmit speed and the layout of the HP (Home Page).

The transport advertisement, which is displayed in the train or the platform in the station, and the advertisements generally seen in a street are usually displayed in papers, such as posters, regarding expense. Although the advertisement using paper is very simple, the compartment, which is closed space, makes the advisement very effective for the passenger when it supposed the transport advertisement.

Flat panel display units mainly such as LCD (Liquid Crystal Display) have prevailed. Consequently, the flat panel display units such as LCDs are increasingly installed in the platform and the compartment of the train. The advertisement on the display in the station or the train, however, is just the reuse of the advertisement used on the television, or is the advertisement using mainly still pictures. It can be hardly said that the potential of the transport advertisement has fully utilized.

Various respective aspect and features of the invention are defined in the appended claims. Features from the dependent claims may be combined with features of the independent claims as appropriate and not merely as explicitly set out in the claims.

The present invention has been made in view of the foregoing circumstances, and an object thereof is to provide techniques for distributing and displaying the advertisement, which is composed of motion picture, to a display unit outlying.

The present invention relates to an advertisement displaying technique. This technique can utilize the image matching technique (referred to as the "base technology" hereinafter) proposed in the Japanese Patent No. 2927350 by the same assignee of the present patent application.

An embodiment of according to the present invention relates to an advertisement displaying method. This method comprises: accepting input of key frames which are basis of creating motion picture which is displayed on a billboard in a remote place; generating corresponding point information used for generating intermediate frames which are inserted between the key frames; storing the key frames and the corresponding point information; managing distribution of the key frames and the corresponding point information, which are related to the billboard to which the key frames and the corresponding point information are distributed; and distributing the key frames and the corresponding point information to the billboard.

The accepting input of the key frames also acquires which key frame is displayed to which timing in an actual advertisement. The number of the intermediate frames may be arbitrary. Since the number of the frames displayed in 1 second is generally decided, when it sets up which key frame is displayed on which timing, the number of the intermediate frames which should be generated between these key frames will be decided. The corresponding point information may be detected based on critical points in key frame.

The method may further comprise acquiring an operation situation of transporters, which are scheduled to pass near the billboard, wherein said managing distribution decides the key frames and the corresponding point information which are distributed to the billboard according to the operation situation of the transporter. For example, when the wall of a subway is equipped with the billboard, it displays the advertisement corresponding to the operation situation of a train, namely, only when a train passes the billboard side. Moreover, you may change the advertisement displayed by time.

The method, wherein said billboard may be installed in a transporter, further comprising acquiring a position of the transporter; wherein said managing distribution decides the key frames and the corresponding point information which are distributed to the billboard by associating the position with the key frame and the corresponding point information. A public transport such as a train or a bus, which travels according to the predetermined schedule, is assumed as the transporter.

The managing distribution may decide the key frames and the corresponding point information, both of which are distributed to the billboard, with reference to time in addition to the position of the transporter.

It assumed that an advertisement is now displayed in a train. Even if it is the same line, a passenger's type may change with time or passage place of the train. Therefore, the advertisement deployment that is extracted the target more is attained by changing the advertisement displayed with time and the position of a train.

The method may further comprise: receiving on the billboard the frames and corresponding point information which are distributed, and outputting the key frames and the intermediate frames to the billboard as motion picture advertisement, generating the intermediate frames base on the received key frames and the received corresponding point information.

Another embodiment of according to the present invention relates to an advertisement displaying apparatus. This apparatus comprises: a key frame accepting unit which accepts input of key frames used as basis of creating motion picture which is displayed on a billboard in a remote place; a corresponding point information generator which generates corresponding point information used for generating intermediate frames which are inserted between the key frames; a key frame preservation unit which stores the key frames and the corresponding point information; a distribution manager which associates key frames and corresponding point information with a billboard and manages distribution of the key frames and the corresponding point information; and a distributor which distributes the key frames and the corresponding point information to the billboard.

The apparatus may further comprise an operation situation acquisition unit which acquires an operation situation of transporters which are scheduled to pass through near the billboard, wherein the distribution manager decides the key frames and the corresponding point information which are distributed to the billboard according to the operation situation.

The billboard may be installed in the transporter; and may further comprise a position detection unit which acquires the position of the transporter, wherein the distribution manager decides the key frames and the corresponding point information which is distributed to the billboard according to associating the position of the transporter with the key frames and the corresponding point information.

The distribution manager may decide the key frames and the correspondence information that is distributed according to referencing the time in addition to the position of the transporter. The apparatus may further comprise; a receiver which receives the key frames and the corresponding point information, both of which are distributed; and an advertisement generator, which generates the motion picture advertisement from the key frames, and the intermediate frames generating the intermediate frames based on the key frames and the correspondence information which is received.

Still another embodiment according to the present invention relates to a computer program executed by a computer. The program comprises the function of: accepting input of key frames which are basis of creating motion picture which is displayed on a billboard in a remote place; generating corresponding point information which is used for generating intermediate frames which are inserted between the key frames; managing distribution of the key frames and the corresponding point information, which are associated to the billboard to which the key frames and the corresponding point information are distributed; distributing the key frames and the corresponding point information to the billboard; receiving on the billboard the key frames and the corresponding point information; and outputting the motion picture advertisement which is comprised in the key frames and the intermediate frames, generating the intermediate frames on the received key frames and the received corresponding point information.

In the above-described embodiments, the function of generating corresponding point data between key frames and of generating intermediate key frames, are performed on the based on the base technology. However, this invention needs not necessarily the base technology.

Any arbitrary replacement or substitution of the above-described structural components and processing contents, expressions replaced or substituted in part or whole between a method and an apparatus as well as addition thereof, and processing steps changed to a processing by a computer program, modes of the invention changed to recording media or the like are all effective as and encompassed by the present invention.

This summary of the invention does not necessarily describe all necessary features so that the invention may also be a sub-combination of these described features.

The invention will now be described by way of example with reference to accompanying drawings, throughout which like parts are referred to by like references, and in which:

Fig. 1a is an image obtained as a result of the application of an averaging filter to a human facial image.
Fig. 1b is an image obtained as a result of the application of an averaging filter to another human facial image.
Fig. 1c is an image of a human face at $p^{(5,0)}$ obtained in a preferred embodiment in the base technology.
Fig. 1d is another image of a human face at $p^{(5,0)}$ obtained in a preferred embodiment in the base technology.
Fig. 1e is an image of a human face at $p^{(5,1)}$ obtained in a preferred embodiment in the base technology.
Fig. 1f is another image of a human face at $p^{(5,1)}$ obtained in a preferred embodiment in the base technology.
Fig. 1g is an image of a human face at $p^{(5,2)}$ obtained in a preferred embodiment in the base technology.
Fig. 1h is another image of a human face at $p^{(5,2)}$ obtained in a preferred embodiment in the base technology.
Fig. 1i is an image of a human face at $p^{(5,3)}$ obtained in a preferred embodiment in the base technology.
Fig. 1j is another image of a human face at $p^{(5,3)}$ obtained in a preferred embodiment in the base technology.
Fig. 2R shows an original quadrilateral.

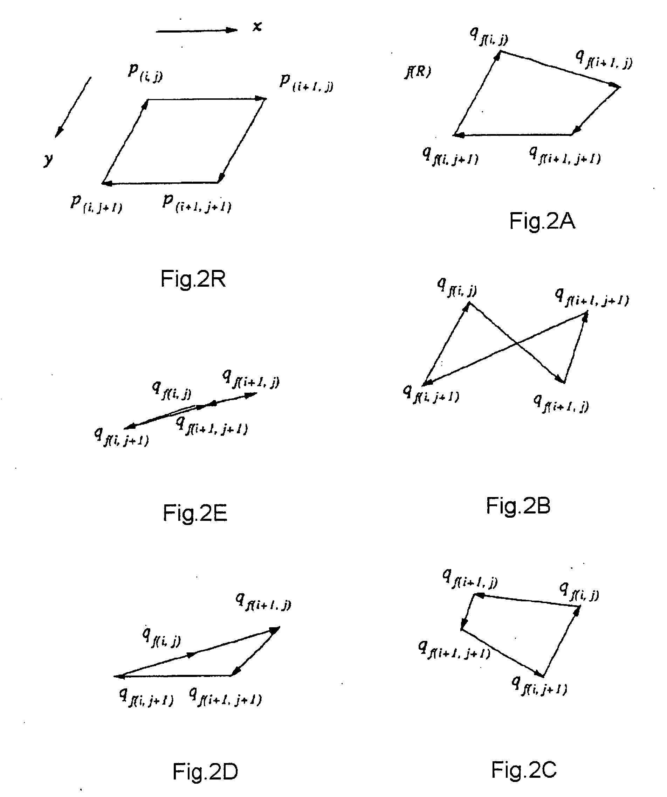

Fig. 2A shows an inherited quadrilateral.
Fig. 2B shows an inherited quadrilateral.

Fig. 2C shows an inherited quadrilateral.

Fig. 2D shows an inherited quadrilateral.

Fig. 2E shows an inherited quadrilateral.

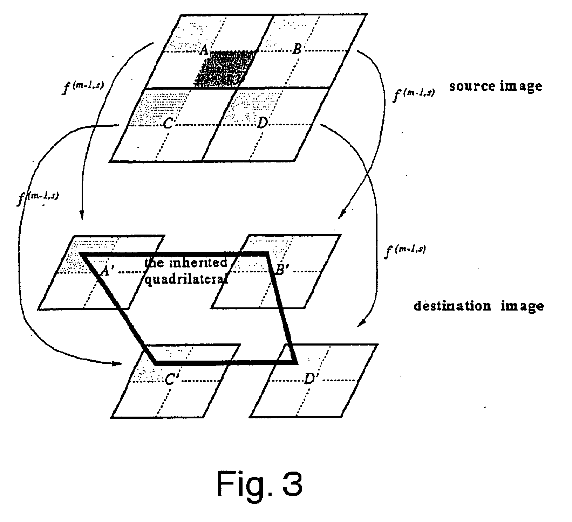

Fig. 3 is a diagram showing the relationship between a source image and a destination image and that between the m-th level and the (m-1)th level, using a quadrilateral.

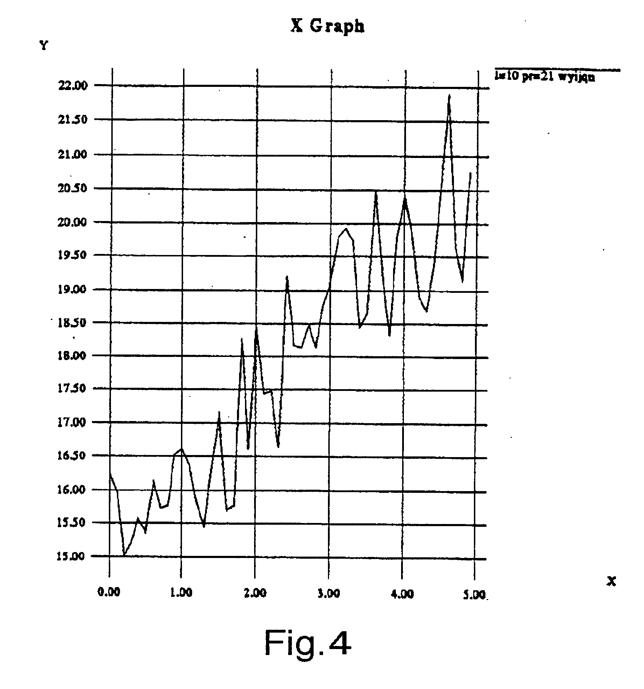

Fig. 4 shows the relationship between a parameter $\eta$ (represented by x-axis) and energy $C_f$ (represented by y-axis).

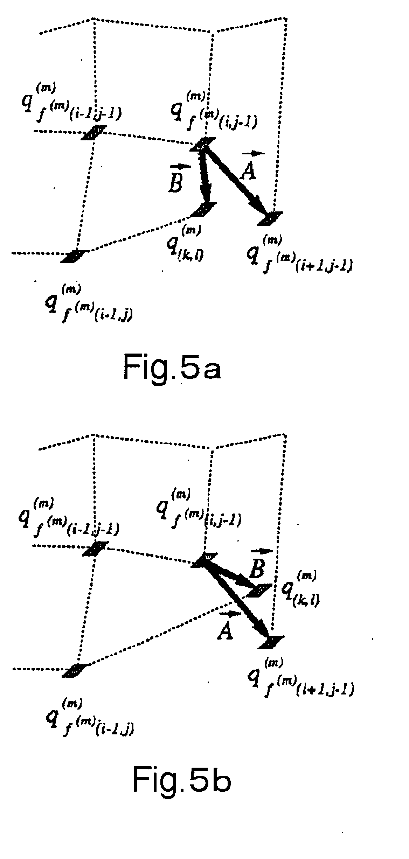

Fig. 5a is a diagram illustrating determination of whether or not the mapping for a certain point satisfies the bijectivity condition through the outer product computation.

Fig. 5b is a diagram illustrating determination of whether or not the mapping for a certain point satisfies the bijectivity condition through the outer product computation.

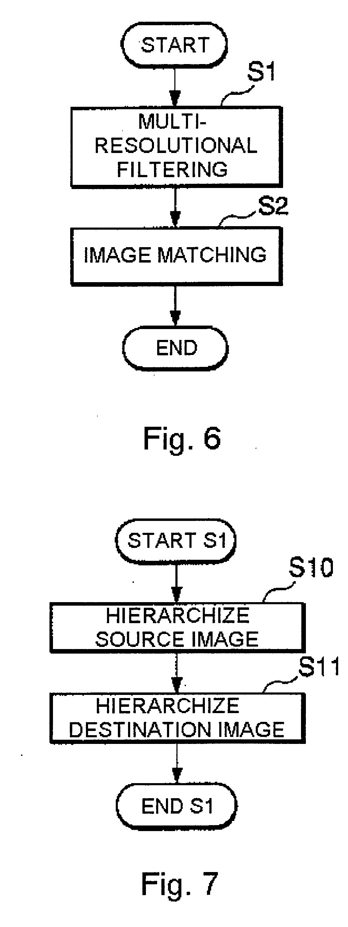

Fig. 6 is a flowchart of the entire procedure of a preferred embodiment in the base technology.

Fig. 7 is a flowchart showing the details of the process at S1 in Fig. 6.

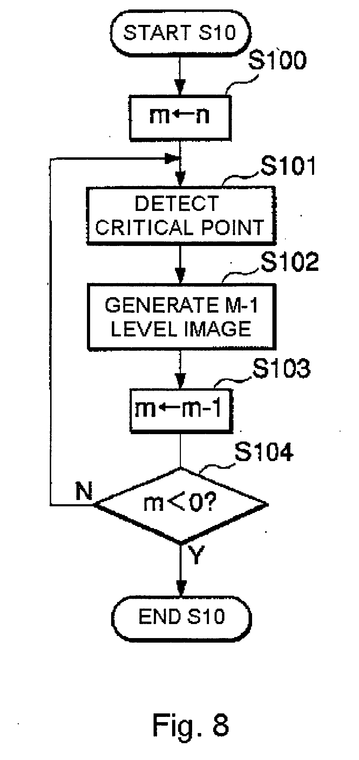

Fig. 8 is a flowchart showing the details of the process at S10 in Fig. 7.

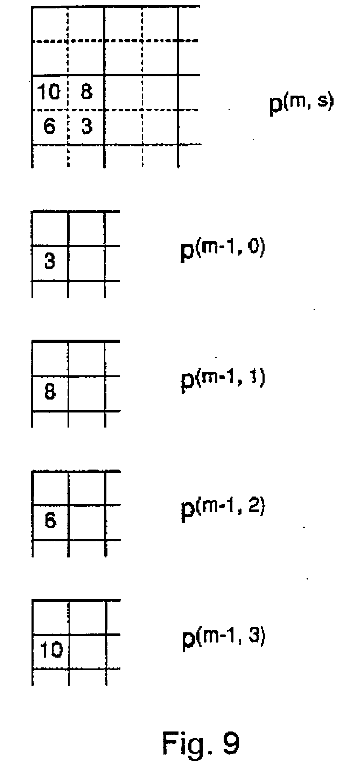

Fig. 9 is a diagram showing correspondence between partial images of the m-th and (m-1)th levels of resolution.

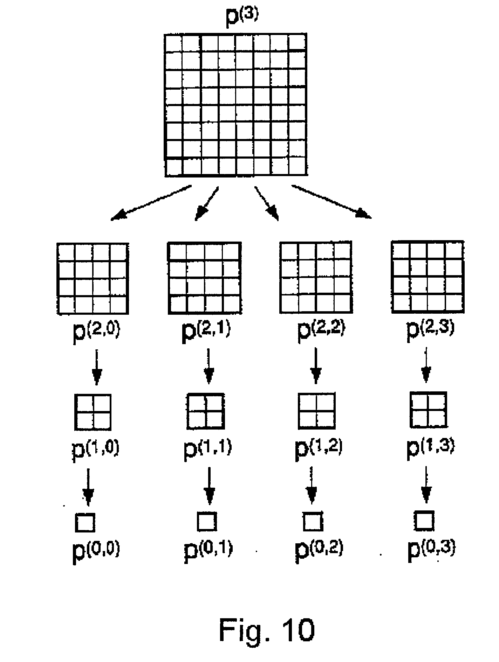

Fig. 10 is a diagram showing source images generated in the embodiment in the base technology.

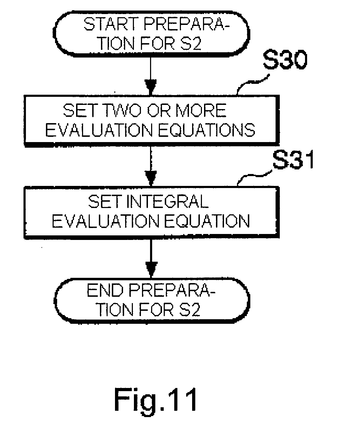

Fig. 11 is a flowchart of a preparation procedure for S2 in Fig. 6.

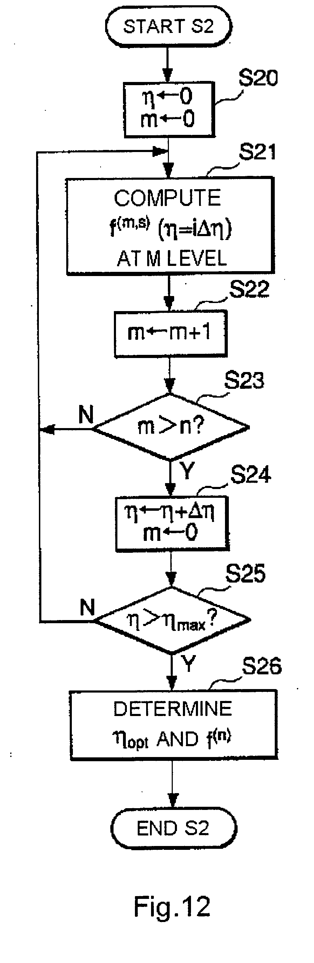

Fig. 12 is a flowchart showing the details of the process at S2 in Fig. 6.

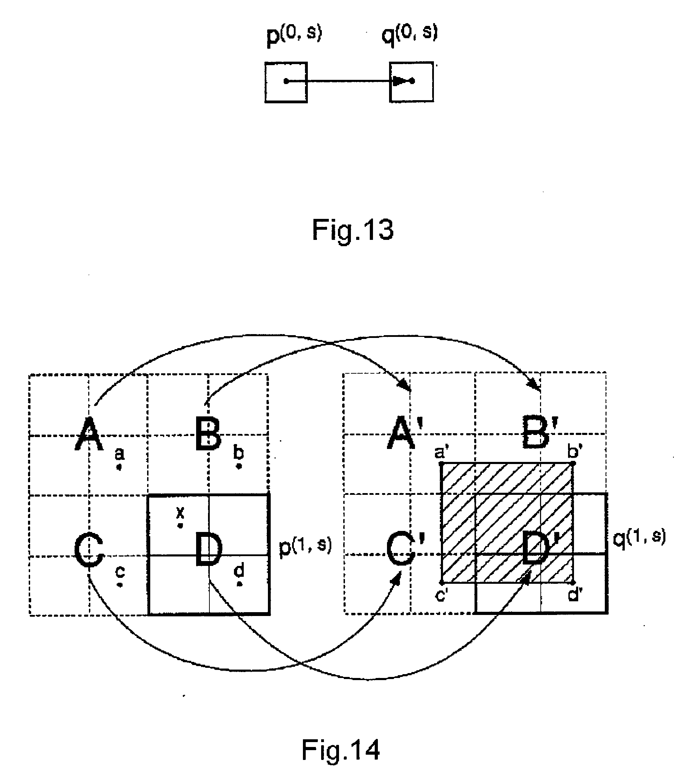

Fig. 13 is a diagram showing the way a submapping is determined at the 0-th level.

Fig. 14 is a diagram showing the way a submapping is determined at the first level.

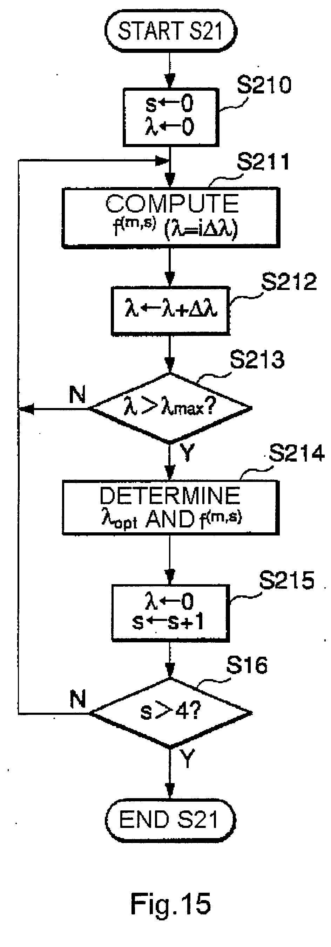

Fig. 15 is a flowchart showing the details of the process at S21 in Fig. 6.

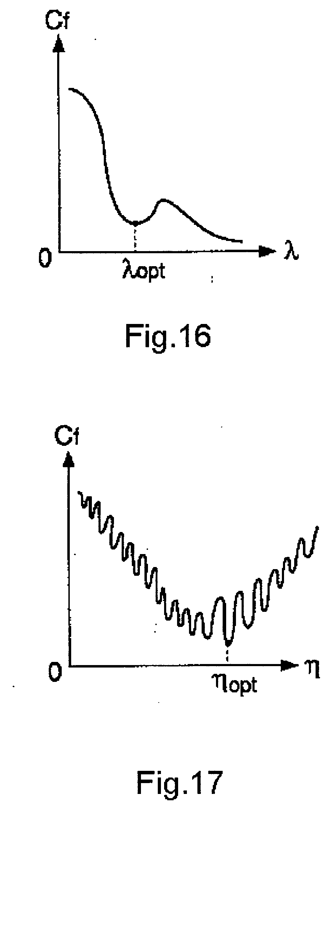

Fig. 16 is a graph showing the behavior of energy $C_f^{(m,s)}$ corresponding to $f^{(m,s)}$ ($\lambda = i\Delta\lambda$) which has been obtained for a certain $f^{(m,s)}$ while changing $\lambda$.

Fig. 17 is a diagram showing the behavior of energy $C_f^{(n)}$ corresponding to $f^{(n)}$ ($\eta = i\Delta\eta$) ($i = 0,1,...$) which has been obtained while changing $\eta$.

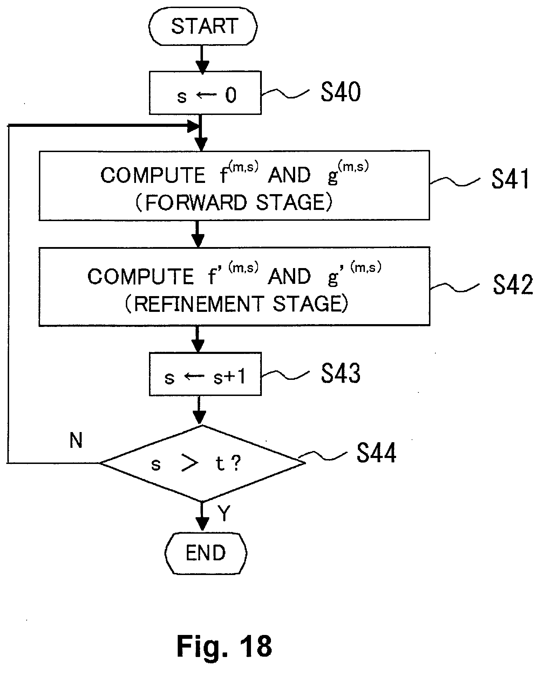

Fig. 18 is a flowchart showing the procedure by which the submapping is obtained at the m-th level in the improved base technology.

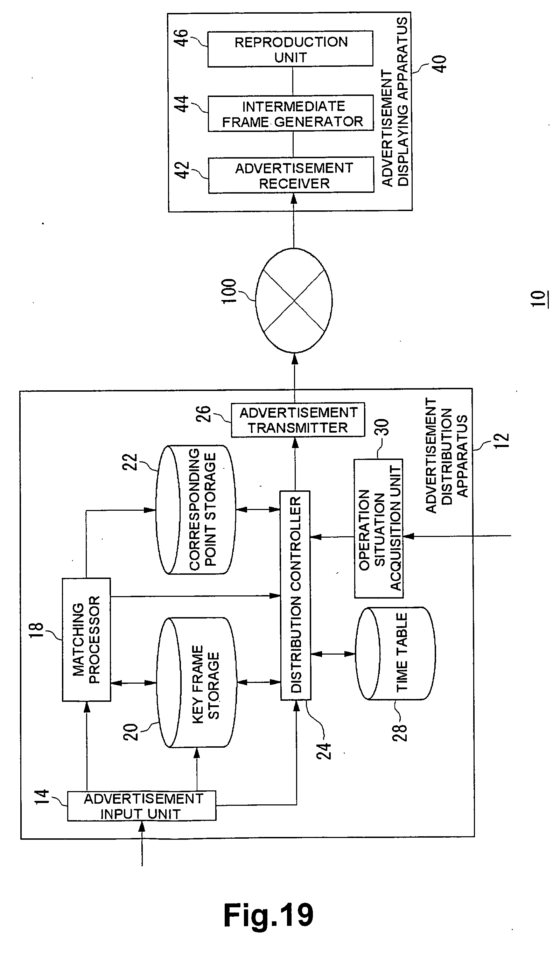

Fig. 19 shows a structure of an advertisement display system that comprises an advertisement distribution unit and an advertisement displaying unit; both units are connected through a communication facility.

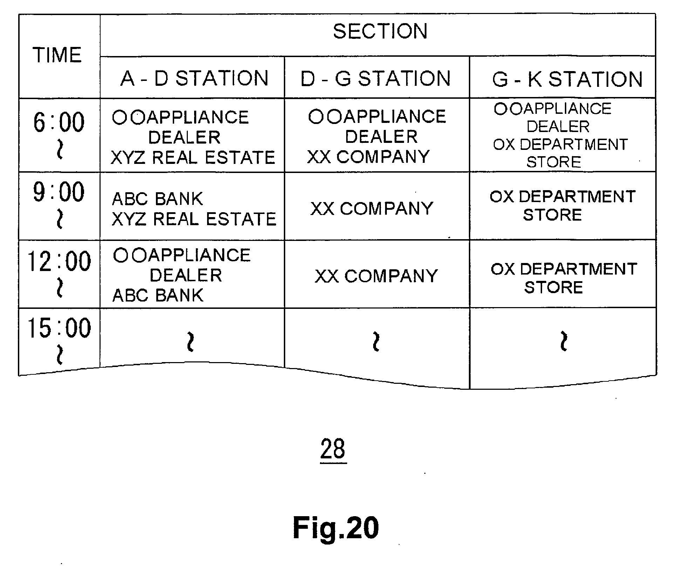

Fig. 20 shows the example of a time schedule regarding displaying advertisements in a train.

The invention will now be described based on the preferred embodiments, which do not intend to limit the scope of the present invention, however, exemplify the invention. All of the features and the combinations thereof described in the embodiment are not necessarily essential to the invention.

At first, the multiresolutional critical point filter technology and the image matching processing using the technology, both of which will be utilized in the preferred embodiments, will be described in detail as "Base Technology". Namely, the following sections of [1], [2] and [3] belong to the base technology, where [1] describes elemental techniques, [2] describes a processing procedure, and [3] describes improved techniques about [1] and [2]. These [1] and [2] techniques are patented under Japanese Patent No. 2927350 and owned by the same inventor of the present invention, and they realize an optimal achievement when combined with the present invention. According to the present invention, there is provided a mesh on the image, so that lattice points thereof represent a plurality of pixels. Thus, application efficiency for such the pixel-by-pixel matching technique as in the base technology is naturally high. However, it is to be noted that the image matching techniques which can be adopted in the present embodiments are not limited to this. In Figs. 19 and 20, advertisement displaying techniques utilizing the base technology will be described in a specific manner.

**Base Technology**

[1] Detailed description of elemental techniques

[1.1] Introduction

Using a set of new multiresolutional filters called critical point filters, image matching is accurately computed. There is no need for any prior knowledge concerning objects in question. The matching of the images is computed at each resolution while proceeding through the resolution hierarchy. The resolution hierarchy proceeds from a coarse level to a fine level. Parameters necessary for the computation are set completely automatically by dynamical computation analogous to human visual systems. Thus, There is no need to manually specify the correspondence of points between the images.

The base technology can be applied to, for instance, completely automated morphing, object recognition, stereo photogrammetry, volume rendering, smooth generation of motion images from a small number of frames. When applied to the morphing, given images can be automatically transformed. When applied to the volume rendering, intermediate images between cross sections can be accurately reconstructed, even when the distance between them is rather long and the cross sections vary widely in shape.

[1.2] The hierarchy of the critical point filters

The multiresolutional filters according to the base technology can preserve the intensity and locations of each critical point included in the images while reducing the resolution. Now, let the width of the image be N and the height of the image be M. For simplicity, assume that N=M=2n where n is a positive integer. An interval [0, N] $\subset$ R is denoted by I. A pixel of the image at position (i, j) is denoted by $p^{(i,j)}$ where i,j . I.

Here, a multiresolutional hierarchy is introduced. Hierarchized image groups are produced by a multiresolutional filter. The multiresolutional filter carries out a two dimensional search on an original image and acquires critical points therefrom. The multiresolutinal filter then extracts the critical points from the original image to construct another image having a lower resolution. Here, the size of each of the respective images of the m-th level is denoted as $2^m X 2^m$ (0 m n). A critical point filter constructs the following four new hierarchical images recursively, in the direction descending from n.

$$p_{(i,j)}^{(m,0)} = \min(\min(p_{(2i,2j)}^{(m+1,0)}, p_{(2i,2j+1)}^{(m+1,0)}), \min(p_{(2i+1,2j)}^{(m+1,0)}, p_{(2i+1,2j+1)}^{(m+1,0)}))$$

$$p_{(i,j)}^{(m,1)} = \max(\min(p_{(2i,2j)}^{(m+1,1)}, p_{(2i,2j+1)}^{(m+1,1)}), \min(p_{(2i+1,2j)}^{(m+1,1)}, p_{(2i+1,2j+1)}^{(m+1,1)}))$$

$$p_{(i,j)}^{(m,2)} = \min(\max(p_{(2i,2j)}^{(m+1,2)}, p_{(2i,2j+1)}^{(m+1,2)}), \max(p_{(2i+1,2j)}^{(m+1,2)}, p_{(2i+1,2j+1)}^{(m+1,2)}))$$

$$p_{(i,j)}^{(m,3)} = \max(\max(p_{(2i,2j)}^{(m+1,3)}, p_{(2i,2j+1)}^{(m+1,3)}), \max(p_{(2i+1,2j)}^{(m+1,3)}, p_{(2i+1,2j+1)}^{(m+1,3)})) \quad (1)$$

where let

$$p_{(i,j)}^{(n,0)} = p_{(i,j)}^{(n,1)} = p_{(i,j)}^{(n,2)} = p_{(i,j)}^{(n,3)} = p_{(i,j)} \quad (2)$$

The above four images are referred to as subimages hereinafter. When $\min_{x\,t\,x+1}$ and $\max_{x\,t\,x+1}$ are abbreviated to and $\alpha$ and $\beta$, respectively, the subimages can be expressed as follows.

$$P^{(m,0)} = \alpha(x)\alpha(y)p^{(m+1,0)}$$

$$P^{(m,1)} = \alpha(x)\beta(y)p^{(m+1,1)}$$

$$P^{(m,2)} = \beta(x)\alpha(y)p^{(m+1,2)}$$

$$P^{(m,2)} = \beta(x)\beta(y)p^{(m+1,3)}$$

Namely, they can be considered analogous to the tensor products of $\alpha$ and $\beta$. The subimages correspond to the respective critical points. As is apparent from the above equations, the critical point filter acquires a critical point of the original image for every block consisting of 2 X 2 pixels. In this acquireion, a point having a maximum pixel value and a point having a minimum pixel value are searched with respect to two directions, namely, vertical and horizontal directions, in each block. Although pixel intensity is used as a pixel value in this base technology, various other values relating to the image may be used. A pixel having the maximum pixel values for the two directions, one having minimum pixel values for the two directions, and one having a minimum pixel value for one direction and a maximum pixel value for the other direction are acquired as a local maximum point, a local minimum point, and a saddle point, respectively.

By using the critical point filter, an image (1 pixel here) of a critical point acquired inside each of the respective blocks serves to represent its block image (4 pixels here). Thus, resolution of the image is reduced. From a singularity theoretical point of view, $\alpha(x)\alpha(y)$ preserves the local minimum point(minima point),$\beta(x)\beta(y)$ preserves the local maximum point(maxima point), $\alpha(x)\beta(y)$ and$\beta(x)\alpha(y)$ preserve the saddle point.

At the beginning, a critical point filtering process is applied separately to a source image and a destination image which are to be matching-computed. Thus, a series of image groups, namely, source hierarchical images and destination hierarchical images are generated. Four source hierarchical images and four destination hierarchical images are generated corresponding to the types of the critical points.

Thereafter, the source hierarchical images and the destination hierarchical images are matched in a series of the resolution levels. First, the minima points are matched using $p^{(m,0)}$. Next, the saddle points are matched using $p^{(m,1)}$ based on the previous matching result for the minima points. Other saddle points are matched using $p^{(m,2)}$. Finally, the maxima points are matched using $p^{(m,3)}$.

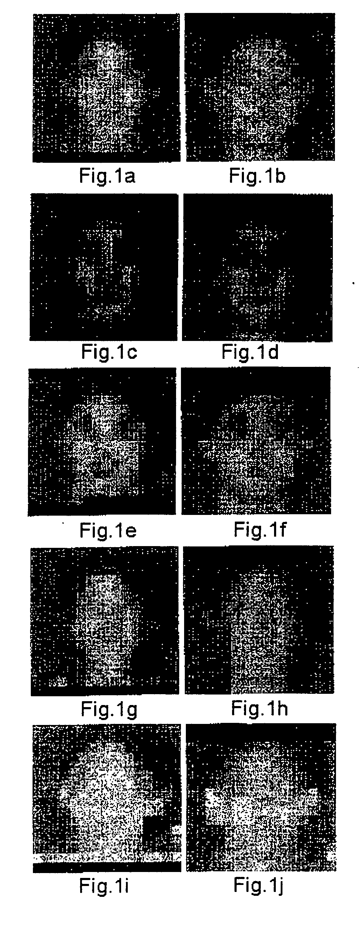

Figs. 1(c) and 1(d) show the subimages $p^{(5,0)}$ of the images in Figs. 1(a) and 1(b), respectively. Similarly, Figs. 1(e) and 1(f) show the subimages $p^{(5,1)}$. Figs. 1(g) and 1(h) show the subimages $p^{(5,2)}$. Figs. 1(i) and 1(j) show the subimages $p^{(5,3)}$. Characteristic parts in the images can be easily matched using subimages. The eyes can be matched by $p^{(5,0)}$ since the eyes are the minima points of pixel intensity in a face. The mouths can be matched by $p^{(5,1)}$ since the mouths have low intensity in the horizontal direction. Vertical lines on the both sides of the necks become clear by $p^{(5,2)}$. The ears and bright parts of cheeks become clear by $p^{(5,3)}$ since these are the maxima points of pixel intensity.

As described above, the characteristics of an image can be extracted by the critical point filter. Thus, by comparing, for example, the characteristics of an image shot by a camera and with the characteristics of several objects recorded in advance, an object shot by the camera can be identified.

[1.3] Computation of mapping between images

The pixel of the source image at the location (i,j) is denoted by $p^{(n)}_{(i,j)}$ and that of the destination image at (k,l) is denoted by $q^{(n)}_{(k,l)}$ where i, j, k, l ∈ I. The energy of the mapping between the images (described later) is then defined. This energy is determined by the difference in the intensity of the pixel of the source image and its corresponding pixel of the destination image and the smoothness of the mapping. First, the mapping $f^{(m,0)}:p^{(m,0)}$ . $q^{(m,0)}$ between $p^{(m,0)}$ and $q^{(m,0)}$ with the minimum energy is computed. Based on $f^{(m,0)}$, the mapping $f^{(m,1)}$ between $p^{(m,1)}$ and $q^{(m,1)}$ with the minimum energy is computed. This process continues until $f^{(m,3)}$ between $p^{(m,3)}$ and $q^{(m,3)}$ is computed. Each $f^{(m,i)}$ (i = 0,1,2,...) is referred to as a submapping. The order of i will be rearranged as shown in the following (3) in computing $f^{(m,i)}$ for the reasons to be described later.

$$ f^{(m,i)} : p^{(m,\sigma(i))} \rightarrow q^{(m,\sigma(i))} \tag{3} $$

where $\sigma(i) \in \{0,1,2,3\}$.

[1. 3. 1] Bijectivity

When the matching between a source image and a destination image is expressed by means of a mapping, that mapping shall satisfy the Bijectivity Conditions (BC) between the two images (note that a one-to-one surjective mapping is called a bijection). This is because the respective images should be connected satisfying both surjection and injection, and there is no conceptual supremacy existing between these images. It is to be to be noted that the mappings to be constructed here are the digital version of the bijection. In the base technology, a pixel is specified by a grid point.

The mapping of the source subimage (a subimage of a source image) to the destination subimage (a subimage of a destination image) is represented by $f^{(m,s)}$: I/2^{n-m}X I/2^{n-m}. I/2^{n-m} X I/2^{n-m} (s = 0,1,...), where $f^{(m,s)}_{(i,j)} = (k,l)$ means that $p^{(m,s)}_{(i,j)}$ of the source image is mapped to $q^{(m,s)}_{(k,l)}$ of the destination image. For simplicity, when f(i,j)=(k,l) holds, a pixel $q^{(k,l)}_{(k,l)}$ is denoted by $q_{f(i,j)}$.

When the data sets are discrete as image pixels (grid points) treated in the base technology, the definition of bijectivity is important. Here, the bijection will be defined in the following manner, where i,i',j,j',k and l are all integers. First, each square region (4)

$$ p^{(m,s)}_{(i,j)} p^{(m,s)}_{(i+1,j)} p^{(m,s)}_{(i+1,j+1)} p^{(m,s)}_{(i,j+1)} \tag{4} $$

on the source image plane denoted by R is considered, where i = 0, ..., $2^m$-1, and j = 0, ..., $2^m$-1. The edges of R are directed as follows.

$$\overrightarrow{p_{(i,j)}^{(m,s)}p_{(i+1,j)}^{(m,s)}}, \ \overrightarrow{p_{(i+1,j)}^{(m,s)}p_{(i+1,j+1)}^{(m,s)}}, \ \overrightarrow{p_{(i+1,j+1)}^{(m,s)}p_{(i,j+1)}^{(m,s)}} \ \text{and} \ \overrightarrow{p_{(i,j+1)}^{(m,s)} \ p_{(i,j)}^{(m,s)}} \tag{5}$$

This square will be mapped by f to a quadrilateral on the destination image plane. The quadrilateral (6)

$$q_{(i,j)}^{(m,s)}q_{(i+1,j)}^{(m,s)}q_{(i+1,j+1)}^{(m,s)}q_{(i,j+1)}^{(m,s)} \tag{6}$$

denoted by $f^{(m,s)}(R)$ should satisfy the following bijectivity conditions(BC).

$$(\text{So}, \ f^{(m,s)} \ (R) = f^{(m,s)} \ (p_{(i,j)}^{(m,s)}p_{(i+1,j)}^{(m,s)}p_{(i+1,j+1)}^{(m,s)}p_{(i,j+1)}^{(m,s)}) = q_{(i,j)}^{(m,s)}q_{(i+1,j)}^{(m,s)}q_{(i+1,j+1)}^{(m,s)}q_{(i,j+1)}^{(m,s)} \ )$$

   1. The edges of the quadrilateral $f^{(m,s)}(R)$ should not intersect one another.
   2. The orientation of the edges of $f^{(m,s)}(R)$ should be the same as that of R (clockwise in the case of Fig. 2).
   3. As a relaxed condition, retraction mapping is allowed.

The bijectivity conditions stated above shall be simply referred to as BC hereinafter.
Without a certain type of a relaxed condition, there would be no mappings which completely satisfy the BC other than a trivial identity mapping. Here, the length of a single edge of $f^{(m,s)}(R)$ may be zero. Namely, $f^{(m,s)}$ (R) may be a triangle. However, it is not allowed to be a point or a line segment having area zero. Specifically speaking, if Fig. 2(R) is the original quadrilateral, Figs. 2(A) and 2(D) satisfy BC while Figs 2(B), 2(C) and 2(E) do not satisfy BC.
In actual implementation, the following condition may be further imposed to easily guarantee that the mapping is surjective. Namely, each pixel on the boundary of the source image is mapped to the pixel that occupies the same locations at the destination image. In other words, f(i,j)=(i,j) (on the four lines of i=0, i=$2^m$-1, j=0, j=$2^m$-1). This condition will be hereinafter referred to as an additional condition.

[1. 3. 2] Energy of mapping

[1. 3. 2. 1] Cost related to the pixel intensity

The energy of the mapping f is defined. An objective here is to search a mapping whose energy becomes minimum. The energy is determined mainly by the difference in the intensity of between the pixel of the source image and its corresponding pixel of the destination image. Namely, the energy $C_{(i,j)}^{(m,s)}$ of the mapping $f^{(m,s)}$ at(i,j) is determined by the following equation (7).

$$C_{(i,j)}^{(m,s)} = |V(p_{(i,j)}^{(m,s)})-V(q_{f(i,j)}^{(m,s)})|^2 \tag{7}$$

where $V(p_{(i,j)}^{(m,s)})$ and $V(q_{f(i,j)}^{(m,s)})$ are the intensity values of the pixels $p_{(i,j)}^{(m,s)}$ and $q_{f(i,j)}^{(m,s)}$, respectively. The total energy $C^{(m,s)}$ of f is a matching evaluation equation, and can be defined as the sum of $C_{(i,j)}^{(m,s)}$ as shown in the following equation (8).

$$C_f^{(m,s)} = \sum_{i=0}^{i=2^m-1} \sum_{j=0}^{j=2^m-1} C_{(i,j)}^{(m,s)} \qquad \text{---} \quad (8)$$

[1. 3. 2. 2] Cost related to the locations of the pixel for smooth mapping

In order to obtain smooth mappings, another energy $D_f$ for the mapping is introduced. The energy $D_f$ is determined by the locations of $p^{(m,s)}$ and $q^{(m,s)}$ (i=0,1,...,$2^m$-1, j=0,1,...,$2^m$-1), regardless of the intensity of the pixels. The energy $D_{(i,j)}^{(m,s)}$ of the mapping $f^{(m,s)}$ at a point (i,j) is determined by the following equation (9).

$$D_{(i,j)}^{(m,s)} = \eta E_{0(i,j)}^{(m,s)} + E_{1(i,j)}^{(m,s)} \qquad (9)$$

where the coefficient parameter $\eta$ which is equal to or greater than 0 is a real number. And we have

$$E_{0(i,j)}^{(m,s)} = \|(i,j)\text{-}f^{(m,s)}(i,j)\|^2 \qquad (10)$$

$$E_{1(i,j)}^{(m,s)} = \sum_{i'=i-1}^{i}\sum_{j'=j-1}^{j} \left\| (f^{(m,s)}(i,j) - (i,j)) - (f^{(m,s)}(i',j') - (i',j')) \right\|^2 / 4 \quad --- \quad (11)$$

where $\|(x,y)\| = \sqrt{x^2 + y^2}$ --- (12) and f(i',j') is defined to be zero for i'<0 and j'<0. $E_0$ is determined by the distance between (i,j) and f(i,j). $E_0$ prevents a pixel from being mapped to a pixel too far away from it. However, $E_0$ will be replaced later by another energy function. $E_1$ ensures the smoothness of the mapping. $E_1$ represents a distance between the displacement of p(i,j) and the displacement of its neighboring points. Based on the above consideration, another evaluation equation for evaluating the matching, or the energy $D_f$ is determined by the following equation (13).

$$D_f^{(m,s)} = \sum_{i=0}^{i=2^m-1}\sum_{j=0}^{j=2^m-1} D_{(i,j)}^{(m,s)} \qquad --- \quad (13)$$

[1. 3. 2. 3] Total energy of the mapping

The total energy of the mapping, that is, a combined evaluation equation which relates to the combination of a plurality of evaluations, is defined as $\lambda C_{(i,j)}^{(m,s)} + D_f^{(m,s)}$, where $\lambda \geqq 0$ is a real number. The goal is to detect a state in which the combined evaluation equation has an extreme value, namely, to find a mapping which gives the minimum energy expressed by the following (14).

$$\min_f \{\lambda C_f^{(m,s)} + D_f^{(m,s)}\} \qquad --- \quad (14)$$

Care must be exercised in that the mapping becomes an identity mapping if $\lambda$=0 and $\eta$=0 (i.e., $f^{(m,s)}(i,j)$=(i,j) for all i=0,1,...,$2^m$-1 and j=0,1,...,$2^m$-1). As will be described later, the mapping can be gradually modified or transformed from an identity mapping since the case of $\lambda$=0 and $\eta$=0 is evaluated at the outset in the base technology. If the combined evaluation equation is defined as $C_f^{(m,s)} + \lambda D_f^{(m,s)}$ where the original position of $\lambda$ is changed as such, the equation with $\lambda$=0 and $\eta$=0 will be $C_f^{(m,s)}$ only. As a result thereof, pixels would be randomly corresponded to each other only because their pixel intensities are close, thus making the mapping totally meaningless. Transforming the mapping based on such a meaningless mapping makes no sense. Thus, the coefficient parameter is so determined that the identity mapping is initially selected for the evaluation as the best mapping.

Similar to this base technology, the difference in the pixel intensity and smoothness is considered in the optical flow technique. However, the optical flow technique cannot be used for image transformation since the optical flow technique takes into account only the local movement of an object. Global correspondence can be detected by utilizing the critical point filter according to the base technology.

[1. 3. 3] Determining the mapping with multiresolution

A mapping $f_{min}$ which gives the minimum energy and satisfies the BC is searched by using the multiresolution hierarchy. The mapping between the source subimage and the destination subimage at each level of the resolution is computed. Starting from the top of the resolution hierarchy (i.e., the coarsest level), the mapping is determined at each resolution level, while mappings at other level is being considered. The number of candidate mappings at each level is restricted by using the mappings at an upper (i.e., coarser) level of the hierarchy. More specifically speaking, in the course of determining a mapping at a certain level, the mapping obtained at the coarser level by one is imposed as a sort of constraint conditions.

Now, when the following equation (15) holds,

$$(i', j') = (\left\lfloor \frac{i}{2} \right\rfloor, \left\lfloor \frac{j}{2} \right\rfloor) \qquad --- \quad (15)$$

$p^{(m-1,s)}_{(i',j')}$ and $q^{(m-1,s)}_{(i',j')}$ are respectively called the parents of $p^{(m,s)}_{(i,j)}$ and $q^{(m,s)}_{(i,j)}$, where $\lfloor x \rfloor$ denotes the largest integer not exceeding x. Conversely, $p^{(m,s)}_{(i,j)}$ and $q^{(m,s)}_{(i,j)}$ are the child of $p^{(m-1,s)}_{(i',j')}$ and the child of $q^{(m-1,s)}_{(i',j')}$, respectively. A function parent(i,j) is defined by the following (16).

$$parent(i, j) = (\left\lfloor \frac{i}{2} \right\rfloor, \left\lfloor \frac{j}{2} \right\rfloor) \qquad --- \quad (16)$$

A mapping between $p^{(m,s)}_{(i,j)}$ and $q^{(m,s)}_{(k,l)}$ is determined by computing the energy and finding the minimum thereof. The value of $f^{(m,s)}(i,j)=(k,l)$ is determined as follows using f(m-1,s) (m=1,2,...,n). First of all, imposed is a condition that $q^{(m,s)}_{(k,l)}$ should lie inside a quadrilateral defined by the following (17) and (18). Then, the applicable mappings are narrowed down by selecting ones that are thought to be reasonable or natural among them satisfying the BC.

$$q^{(m,s)}_{g^{(m,s)}(i-1,j-1)} \, q^{(m,s)}_{g^{(m,s)}(i-1,j+1)} \, q^{(m,s)}_{g^{(m,s)}(i+1,j+1)} \, q^{(m,s)}_{g^{(m,s)}(i+1,j-1)} \qquad (17)$$

where

$$g^{(m,s)}(i, j) = f^{(m-1,s)}(parent(i,j)) + f^{(m-1,s)}(parent(i,j) + (1,1)) \qquad (18)$$

The quadrilateral defined above is hereinafter referred to as the inherited quadrilateral of $p^{(m,s)}_{(i,j)}$. The pixel minimizing the energy is sought and obtained inside the inherited quadrilateral.

Fig. 3 illustrates the above-described procedures. The pixels A, B, C and D of the source image are mapped to A', B', C' and D' of the destination image, respectively, at the (m-1)th level in the hierarchy. The pixel $p^{(m,s)}_{(i,j)}$ should be mapped to the pixel $q^{(m,s)}_{f^{(m)}(i,j)}$ which exists inside the inherited quadrilateral A'B'C'D'. Thereby, bridging from the mapping at the (m-1)th level to the mapping at the m-th level is achieved.

The energy $E_0$ defined above is now replaced by the following (19) and (20)

$$E_{0_{(i,j)}} = \|f^{(m,0)}(i,j) - g^{(m)}(i,j)\|^2 \qquad (19)$$

$$E_{0_{(i,j)}} = \|f^{(m,s)}(i,j) - f^{(m,s-1)}(i, j)\|^2, \ (1 \le i) \qquad (20)$$

for computing the submapping $f^{(m,0)}$ and the submapping $f^{(m,s)}$ at the m-th level, respectively.

In this manner, a mapping which keeps low the energy of all the submappings is obtained. Using the equation (20) makes the submappings corresponding to the different critical points associated to each other within the same level in order that the subimages can have high similarity. The equation (19) represents the distance between $f^{(m,s)}(i,j)$ and the location where (i,j) should be mapped when regarded as a part of a pixel at the (m-1)the level.

When there is no pixel satisfying the BC inside the inherited quadrilateral A'B'C'D', the following steps are taken. First, pixels whose distance from the boundary of A'B'C'D' is L (at first, L=1) are examined. If a pixel whose energy is the minimum among them satisfies the BC, then this pixel will be selected as a value of $f^{(m,s)}(i,j)$. L is increased until such a pixel is found or L reaches its upper bound $L^{(m)}_{max}$. $L^{(m)}_{max}$ is fixed for each level m. If no such a pixel is found at all, the third condition of the BC is ignored temporarily and such mappings that caused the area of the transformed quadrilateral to become zero (a point or a line) will be permitted so as to determine $f^{(m,s)}(i,j)$. If such a pixel is still not found, then the first and the second conditions of the BC will be removed.

Multiresolution approximation is essential to determining the global correspondence of the images while preventing the mapping from being affected by small details of the images. Without the multiresolution approximation, it is impossible to detect a correspondence between pixels whose distances are large. In the case where the multiresolution approximation is not available, the size of an image will be limited to the very small one, and only tiny changes in the images can be handled. Moreover, imposing smoothness on the mapping usually makes it difficult to find the correspondence of such pixels. That is because the energy of the mapping from one pixel to another pixel which is far therefrom is high. On the other hand, the multiresolution approximation enables finding the approximate correspondence of such pixels. This is because the distance between the pixels is small at the upper (coarser) level of the hierarchy of the resolution.

[1. 4] Automatic determination of the optimal parameter values

One of the main deficiencies of the existing image matching techniques lies in the difficulty of parameter adjustment. In most cases, the parameter adjustment is performed manually and it is extremely difficult to select the optical value. However, according to the base technology, the optimal parameter values can be obtained completely automatically.

The systems according to this base technology includes two parameters, namely, $\lambda$ and $\eta$, where $\lambda$ and $\eta$ represent the weight of the difference of the pixel intensity and the stiffness of the mapping, respectively. The initial value for these parameters are 0. First, $\lambda$ is gradually increased from $\lambda=0$ while $\eta$ is fixed to 0. As $\lambda$ becomes larger and the value of the combined evaluation equation (equation (14)) is minimized, the value of $C_f^{(m,s)}$ for each submapping generally becomes smaller. This basically means that the two images are matched better. However, if $\lambda$ exceeds the optimal value, the following phenomena (1 - 4) are caused.

1. Pixels which should not be corresponded are erroneously corresponded only because their intensities are close.
2. As a result, correspondence between images becomes inaccurate, and the mapping becomes invalid.
3. As a result, $D_f^{(m,s)}$ in the equation 14 tends to increase abruptly.
4. As a result, since the value of the equation 14 tends to increase abruptly, $f^{(m,s)}$ changes in order to suppress the abrupt increase of $D_f^{(m,s)}$. As a result, $C_f^{(m,s)}$ increases.

Therefore, a threshold value at which $C_f^{(m,s)}$ turns to an increase from a decrease is detected while a state in which the equation (14) takes the minimum value with $\lambda$ being increased is kept. Such $\lambda$ is determined as the optimal value at $\eta=0$. Then, the behavior of $C_f^{(m,s)}$ is examined while $\eta$ is increased gradually, and $\eta$ will be automatically determined by a method described later. $\lambda$ will be determined corresponding to such the automatically determined $\eta$.

The above-described method resembles the focusing mechanism of human visual systems. In the human visual systems, the images of the respective right eye and left eye are matched while moving one eye. When the objects are clearly recognized, the moving eye is fixed.

[1. 4. 1] Dynamic determination of $\lambda$

$\lambda$ is increased from 0 at a certain interval, and the a subimage is evaluated each time the value of $\lambda$ changes. As shown in the equation (14), the total energy is defined by $\lambda C_f^{(m,s)} + D_f^{(m,s)}$. $D_{(i,j)}^{(m,s)}$ in the equation (9) represents the smoothness and theoretically becomes minimum when it is the identity mapping. $E_0$ and $E_1$ increase as the mapping is further distorted. Since $E_1$ is an integer, 1 is the smallest step of $D_f^{(m,s)}$. Thus, that changing the mapping reduces the total energy is impossible unless a changed amount (reduction amount) of the current $\lambda C_{(i,j)}^{(m,s)}$ is equal to or greater than 1. Since $D_f^{(m,s)}$ increases by more than 1 accompanied by the change of the mapping, the total energy is not reduced unless $\lambda C_{(i,j)}^{(m,s)}$ is reduced by more than 1.

Under this condition, it is shown that $C_{(i,j)}^{(m,s)}$ decreases in normal cases as $\lambda$ increases. The histogram of $C_{(i,j)}^{(m,s)}$ is denoted as h(l), where h(l) is the number of pixels whose energy $C_{(i,j)}^{(m,s)}$ is $l^2$. In order that $\lambda l^2 \geqq 1$, for example, the case of $l^2=1/\lambda$ is considered. When $\lambda$ varies from $\lambda_1$ to $\lambda_2$, a number of pixels (denoted A) expressed by the following (21)

$$A = \sum_{l=\left\lceil \frac{1}{\lambda_2} \right\rceil}^{\left\lfloor \frac{1}{\lambda_1} \right\rfloor} h(l) \cong \int_{l=\frac{1}{\lambda_2}}^{\frac{1}{\lambda_1}} h(l)dl = -\int_{\lambda_2}^{\lambda_1} h(l)\frac{1}{\lambda^{3/2}}d\lambda = \int_{\lambda_1}^{\lambda_2}\frac{h(l)}{\lambda^{3/2}}d\lambda \qquad --- \quad (21)$$

changes to a more stable state having the energy (22) which is

$$C_f^{(m,s)} \cdot l^2 = C_f^{(m,s)} \cdot \frac{1}{\lambda}. \tag{22}$$

Here, it is assumed that all the energy of these pixels is approximated to be zero. It means that the value of $C_{(i,j)}^{(m,s)}$ changes by (23).

$$\partial C_f^{(m,s)} = -\frac{A}{\lambda} \tag{23}$$

As a result, the equation (24) holds.

$$\frac{\partial C_f^{(m,s)}}{\partial \lambda} = -\frac{h(l)}{\lambda^{5/2}} \tag{24}$$

Since h(l)>0 , $C_f^{(m,s)}$ decreases in normal case. However, when $\lambda$ tends to exceed the optimal value, the above phenomenon that is characterized by the increase in $C_f^{(m,s)}$ occurs. The optimal value of $\lambda$ is determined by detecting this phenomenon.

When

$$h(l) = Hl^k = \frac{H}{\lambda^{k/2}} \tag{25}$$

is assumed where both H(h>0) and k are constants, the equation (26) holds.

$$\frac{\partial C_f^{(m,s)}}{\partial \lambda} = \frac{H}{\lambda^{5/2+k/2}} \tag{26}$$

Then, if k≠-3, the following (27) holds.

$$C_f^{(m,s)} = C + \frac{H}{(3/2+k/2)\lambda^{3/2+k/2}} \tag{27}$$

The equation (27) is a general equation of $C_f^{(m,s)}$ (where C is a constant).

When detecting the optimal value of $\lambda$, the number of pixels violating the BC may be examined for safety. In the course of determining a mapping for each pixel, the probability of violating the BC is assumed $p_0$ here. In that case, since

$$\frac{\partial A}{\partial \lambda} = \frac{h(l)}{\lambda^{3/2}} \tag{28}$$

holds, the number of pixels violating the BC increases at a rate of the equation (29).

$$B_0 = \frac{h(l)P_0}{\lambda^{3/2}} \tag{29}$$

Thus,

$$\frac{B_0\lambda^{3/2}}{P_0 h(l)} = 1 \tag{30}$$

is a constant. If assumed that h(l)=Hl^k, the following (31), for example,

$$B_0\lambda^{3/2+k/2} = p_0 H \tag{31}$$

becomes a constant. However, when $\lambda$ exceeds the optimal value, the above value of (31) increases abruptly. By detecting this phenomenon, whether or not the value of $B_0\lambda^{3/2+k/2}/2^m$ exceeds an abnormal value $B_{0thres}$ exceeds is inspected, so that the optimal value of can be determined. Similarly, whether or not the value of $B_1\lambda^{3/2+k/2}/2^m$ exceeds an abnormal value $B_{1thres}$, so that the increasing rate $B_1$ of pixels violating the third condition of the BC is checked. The reason why the fact $2^m$ is introduced here will be described at a later stage. This system is not sensitive to the two threshold values $B_{0thres}$ and $B_{1thres}$. The two threshold values $B_{0thres}$ and $B_{1thres}$ can be used to detect the excessive distortion of the mapping which is failed to be detected through the observation of the energy $C_f^{(m,s)}$.

In the experimentation, the computation of $f^{(m,s)}$ is stopped and then the computation of $f^{(m,s+1)}$ is started when $\lambda$ exceeded 0.1. That is because the computation of submappings is affected by the difference of mere 3 out of 255 levels in the pixel intensity when $\lambda>0.1$, and it is difficult to obtain a correct result when $\lambda>0.1$.

[1. 4. 2] Histogram h(l)

The examination of $C_f^{(m,s)}$ does not depend on the histogram h(l). The examination of the BC and its third condition may be affected by the h(l). k is usually close to 1 when ($\lambda$, $C_f^{(m,s)}$ is actually plotted. In the experiment, k=1 is used, that is, $B_0\lambda^2$ and $B_1\lambda^2$ are examined. If the true value of k is less than 1, $B_0\lambda^2$ and $B_1\lambda^2$ does not become constants and increase gradually by the factor of $\lambda^{(1-k)/2}$. If h(l) is a constant, the factor is, for example, $\lambda^{1/2}$. However, such a difference can be absorbed by setting the threshold $B_{0thres}$ appropriately.

Let us model the source image by a circular object with its center at$(x_0,y_0)$ and its radius r, given by:

$$p(i, j) = \begin{cases} \dfrac{255}{r} c(\sqrt{(i-x_0)^2 + (j-y_0)^2})...(\sqrt{(i-x_0)^2 + (j-y_0)^2} \le r) \\ 0...(otherwise) \end{cases}$$

$$---(32)$$

and the destination image given by:

$$q(i, j) = \begin{cases} \dfrac{255}{r} c(\sqrt{(i-x_1)^2 + (j-y_1)^2})...(\sqrt{(i-x_1)^2 + (j-y_1)^2} \le r) \\ 0...(otherwise) \end{cases}$$

$$--- (33)$$

with its center at$(x_1,y_1)$ and radius r. Let c(x) has the form of $c(x)=x^k$. When the centers $(x_0,y_0)$ and $(x_1,y_1)$ are sufficiently far from each other, the histogram h(l) is then in the form of:

$$h(l) \propto rl^k \ (k \ne 0) \tag{34}$$

When k=1, the images represent objects with clear boundaries embedded in the backgrounds. These objects become darker toward their centers and brighter toward their boundaries. When k=-1, the images represent objects with vague boundaries. These objects are brightest at their centers, and become darker toward boundaries. Without much loss of generality, it suffices to state that objects in general are between these two types of objects. Thus, k such that $-1 \le k \le 1$ can cover the most cases, and it is guaranteed that the equation (27) is generally a decreasing function.

As can be observed from the above equation (34), attention must be directed to the fact that r is influenced by the resolution of the image, namely, r is proportional to $2^m$. That is why the factor $2^m$ was introduced in the above section [1.4.1].

[1. 4. 3] Dynamic determination of η

The parameter η can also be automatically determined in the same manner. Initially, η is set to zero, and the final mapping $f^{(n)}$ and the energy $C_f^{(n)}$ at the finest resolution are computed. Then, after η is increased by a certain value Δη and the final mapping $f^{(n)}$ and the energy $C_f^{(n)}$ at the finest resolution are again computed. This process is repeated until the optimal value is obtained. η represents the stiffness of the mapping because it is a weight of the following equation (35).

$$E_{0(i,j)}^{(m,s)} = \|f^{(m,s)}(i,j) - f^{(m,s-1)}(i,j)\|^2 \tag{35}$$

When η is zero, $D_f^{(n)}$ is determined irrespective of the previous submapping, and the present submapping would be elastically deformed and become too distorted. On the other hand, when η is a very large value, $D_f^{(n)}$ is almost completely determined by the immediately previous submapping. The submappings are then very stiff, and the pixels are mapped to almost the same locations. The resulting mapping is therefore the identity mapping. When the value of η increases from 0, $C_f^{(n)}$ gradually decreases as will be described later. However, when the value of η exceeds the optimal value, the energy starts increasing as shown in Fig. 4. In Fig. 4, the x-axis represents η, and y-axis represents $C_f$.

The optimum value of η which minimizes $C_f^{(n)}$ can be obtained in this manner. However, since various elements affects the computation compared to the case of λ, $C_f^{(n)}$ changes while slightly fluctuating. This difference is caused because a submapping is re-computed once in the case of λ whenever an input changes slightly, whereas all the submappings must be re-computed in the case of η. Thus, whether the obtained value of $C_f^{(n)}$ is the minimum or not cannot be judged instantly. When candidates for the minimum value are found, the true minimum needs to be searched by setting up further finer interval.

[1. 5] Supersampling

When deciding the correspondence between the pixels, the range of $f^{(m,s)}$ can be expanded to R X R (R being the set of real numbers) in order to increase the degree of freedom. In this case, the intensity of the pixels of the destination image is interpolated, so that $f^{(m,s)}$ having the intensity at non-integer points

$$V(q_{f^{(m,s)}(i,j)}^{(m,s)}) \tag{36}$$

is provided. Namely, supersampling is performed. In its actual implementation, $f^{(m,s)}$ is allowed to take integer and half integer values, and

$$V(q_{(i,j)+(0.5,0.5)}^{(m,s)}) \tag{37}$$

is given by

$$(V(q_{(i,j)}^{(m,s)}) + V(q_{(i,j)+(1,1)}^{(m,s)}))/2 \tag{38}$$

[1. 6] Normalization of the pixel intensity of each image

When the source and destination images contain quite different objects, the raw pixel intensity may not be used to compute the mapping because a large difference in the pixel intensity causes excessively large energy $C_f^{(m,s)}$ relating the intensity, thus making it difficult to perform the correct evaluation.

For example, the matching between a human face and a cat's face is computed as shown in Figs. 20(a) and 20(b). The cat's face is covered with hair and is a mixture of very bright pixels and very dark pixels. In this case, in order to compute the submappings of the two faces, its subimages are normalized. Namely, the darkest pixel intensity is set to 0 while the brightest pixel intensity is set to 255, and other pixel intensity values are obtained using the linear interpolation.

[1. 7] Implementation

In the implementation, utilized is a heuristic method where the computation proceeds linearly as the source image is scanned. First, the value of $f^{(m,s)}$ is determined at the top leftmost pixel (i,j)=(0,0). The value of each $f^{(m,s)}$(i, j) is then determined while i is increased by one at each step. When i reaches the width of the image, j is increased by one and i is reset to zero. Thereafter, $f^{(m,s)}$(i,j) is determined while scanning the source image. Once pixel correspondence is determined for all the points, it means that a single mapping $f^{(m,s)}$ is determined.

When a corresponding point $q_{f(i,j)}$ is determined for $p_{(i,j)}$, a corresponding point $q_{f(i,j+1)}$ of $p_{(i,j+1)}$ is determined next. The position of $q_{f(i,j+1)}$ is constrained by the position of $q_{f(i,j)}$ since the position of $q_{f(i,j+1)}$ satisfies the BC. Thus, in this system, a point whose corresponding point is determined earlier is given higher priority. If the situation continues in which (0,0) is always given the highest priority, the final mapping might be unnecessarily biased. In order to avoid this bias, $f^{(m,s)}$ is determined in the following manner in the base technology.

First, when (s mod 4) is 0, $f^{(m,s)}$ is determined starting from (0,0) while gradually increasing both i and j. When (s mod 4) is 1, it is determined starting from the top rightmost location while decreasing i and increasing j. When (s mod 4) is 2, it is determined starting from the bottom rightmost location while decreasing both i and j. When (s mod 4) is 3, it is determined starting from the bottom leftmost location while increasing i and decreasing j. Since a concept such as the submapping, that is, a parameter s, does not exist in the finest n-th level, $f^{(m,s)}$ is computed continuously in two directions on the assumption that s=0 and s=2.

In the actual implementation, the values of $f^{(m,s)}$(i,j) (m=0,...,n) that satisfy the BC are chosen as much as possible, from the candidates (k,l) by awarding a penalty to the candidates violating the BC. The energy $D_{(k,l)}$ of the candidate that violates the third condition of the BC is multiplied by Ø and that of a candidate that violates the first or second condition of the BC is multiplied by ψ. In the actual implementation, Ø=2 and ψ=100000 are used.

In order to check the above-mentioned BC, the following test is performed as the actual procedure when determining (k,l)=$f^{(m,s)}$(i,j). Namely, for each grid point (k,l) in the inherited quadrilateral of $f^{(m,s)}$(i,j), whether or not the z-component of the outer product of

$$W = \overset{\rho}{A} \times \overset{\rho}{B} \qquad --- (39)$$

is equal to or greater than 0 is examined, where

$$\overset{\rho}{A} = \overrightarrow{q^{(m,s)}_{f^{(m,s)}(i,j-1)} q^{(m,s)}_{f^{(m,s)}(i+1,j-1)}} \qquad ---(40)$$

$$\overset{\rho}{B} = \overrightarrow{q^{(m,s)}_{f^{(m,s)}(i,j-1)} q^{(m,s)}_{(k,l)}} \qquad ---(41)$$

Here, the vectors are regarded as 3D vectors and the z-axis is defined in the orthogonal right-hand coordinate system. When W is negative, the candidate is awarded a penalty by multiplying $D^{(m,s)}_{(k,l)}$ by ψ so as not to be selected as much as possible.

Figs. 5(a) and 5(b) illustrate the reason why this condition is inspected. Fig. 5(a) shows a candidate without a penalty and Fig. 5(b) shows one with a penalty. When determining the mapping $f^{(m,s)}$(i,j+1) for the adjacent pixel at (i,j+1), there is no pixel on the source image plane that satisfies the BC if the z-component of W is negative because then $q^{(m,s)}_{(k,l)}$ passes the boundary of the adjacent quadrilateral.

[1. 7. 1] The order of submappings

In the actual implementation, σ(0)=0, σ(1)=1, σ(2)=2, σ(3)=3, σ(4)=0 were used when the resolution level was even, while σ(0)=3, σ(1)=2, σ(2)=1, σ(3)=0, σ(4)=3 were used when the resolution level was odd. Thus, the submappings are shuffled in an approximately manner. It is to be noted that the submapping is primarily of four types, and s may be any one among 0 to 3. However, a processing with s=4 was actually performed for the reason described later.

[1. 8] Interpolations

After the mapping between the source and destination images is determined, the intensity values of the corresponding pixels are interpolated. In the implementation, trilinear interpolation is used. Suppose that a square $p_{(i,j)}p_{(i+1,j)}p_{(i+1,j+1)}p_{(i,j+1)}$ on the source image plane is mapped to a quadrilateral $q_{f(i,j)}q_{f(i+1,j)}q_{f(i+1,j+1)}q_{f(i,j+1)}$ on the destination image plane. For simplicity, the distance between the image planes is assumed 1. The intermediate image pixels r(x,y,t) ($0{\leq}x{\leq}N$-1, $0{\leq}y{\leq}M$-1) whose distance from the source image plane is t ($0{\leq}t{\leq}1$) are obtained as follows. First, the location of the pixel r(x,y,t), where x,y,t∈R, is determined by the equation (42).

$$
\begin{aligned}
(x, y) = {}& (1 - dx)(1 - dy)(1 - t)(i, j) + (1 - dx)(1 - dy)tf(i, j) \\
& + dx(1 - dy)(1 - t)(i + 1, j) + dx(1 - dy)tf(i + 1, j) \\
& + (1 - dx)dy(1 - t)(i, j + 1) + (1 - dx)dytf(i, j + 1) \\
& + dxdy(1 - t)(i + 1, j + 1) + dxdytf(i + 1, j + 1)
\end{aligned} \quad\text{---}\quad (42)
$$

The value of the pixel intensity at r(x,y,t) is then determined by the equation (43).

$$
\begin{aligned}
V(r(x, y, t)) = {}& (1 - dx)(1 - dy)(1 - t)V(p_{(i,j)}) + (1 - dx)(1 - dy)tV(q_{f(i,j)}) \\
& + dx(1 - dy)(1 - t)V(p_{(i+1,j)}) + dx(1 - dy)tV(q_{f(i+1,j)}) \\
& + (1 - dx)dy(1 - t)V(p_{(i,j+1)}) + (1 - dx)dytV(q_{f(i,j+1)}) \\
& + dxdy(1 - t)V(p_{(i+1,j+1)}) + dxdytV(q_{f(i+1,j+1)})
\end{aligned}
$$

$$\text{---}\quad (43)$$

where dx and dy are parameters varying from 0 to 1.

[1. 9] Mapping to which constraints are imposed

So far, the determination of the mapping to which no constraint is imposed has been described. However, when a correspondence between particular pixels of the source and destination images is provided in a predetermined manner, the mapping can be determined using such correspondence as a constraint.

The basic idea is that the source image is roughly deformed by an approximate mapping which maps the specified pixels of the source image to the specified pixels of the destination images and thereafter a mapping f is accurately computed.

First, the specified pixels of the source image are mapped to the specified pixels of the destination image, then the approximate mapping that maps other pixels of the source image to appropriate locations are determined. In other words, the mapping is such that pixels in the vicinity of the specified pixels are mapped to the locations near the position to which the specified one is mapped. Here, the approximate mapping at the m-th level in the resolution hierarchy is denoted by $F^{(m)}$.

The approximate mapping F is determined in the following manner. First, the mapping for several pixels are specified. When $n_s$ pixels

$$
p(i_0, j_0),\ p(i_1, j_1),...,\ p(i_{n_s\text{-}1}, j_{n_s\text{-}1}) \tag{44}
$$

of the source image are specified, the following values in the equation (45) are determined.

$$F^{(n)}(i_0, j_0) = (k_0, l_0),$$
$$F^{(n)}(i_1, j_1) = (k_1, l_1),..., \qquad\qquad --- (45)$$
$$F^{(n)}(i_{n_s-1}, j_{n_s-1}) = (k_{n_s-1}, l_{n_s-1})$$

For the remaining pixels of the source image, the amount of displacement is the weighted average of the displacement of $P(i_h, j_h)$ (h=0,..., $n_s$ -1). Namely, a pixel $p_{(i,j)}$ is mapped to the following pixel (expressed by the equation (46)) of the destination image.

$$F^{(m)}(i, j) = \frac{(i, j) + \sum_{h=0}^{h=n_s-1}(k_h - i_h, l_h - j_h)weight_h(i, j)}{2^{n-m}} \qquad --- (46)$$

where

$$weight_h(i,j) = \frac{1/\|(i_h - i, j_h - j)\|^2}{total\_weight(i,j)} \qquad\qquad (47)$$

where

$$total\_weight(i, j) = \sum_{h=0}^{h=n_s-1} 1/\|(i_h - i, j_h - j)\|^2 \qquad --- (48)$$

Second, the energy $D^{(m,s)}$ of the candidate mapping f is changed so that mapping f similar to $F^{(m)}$ has a lower energy. Precisely speaking, $D^{(m,s)}_{(i,j)}$ is expressed by the equation (49).

$$D^{(m,s)}_{(i,j)} = E^{(m,s)}_{0_{(i,j)}} + \eta E^{(m,s)}_{1_{(i,j)}} + \kappa E^{(m,s)}_{2_{(i,j)}} \qquad\qquad (49)$$

$$E^{(m.s)}_{2_{(i,j)}} = \begin{cases} 0, & if \|F^{(m)}(i, j) - f^{(m,s)}(i, j)\|^2 \le \left\lfloor \dfrac{\rho^2}{2^{2(n-m)}} \right\rfloor \\ \|F^{(m)}(i, j) - f^{(m,s)}(i, j)\|^2, & otherwise \end{cases} \qquad --- (50)$$

where $\kappa, \rho \geqq 0$. Finally, the mapping f is completely determined by the above-described automatic computing process of mappings.

Note that $E^{(m,s)}_{2_{(i,j)}}$ becomes 0 if $f^{(m,s)}(i,j)$ is sufficiently close to $F^{(m)}(i,j)$ i.e., the distance therebetween is equal to or less than

$$\left\lfloor \frac{\rho^2}{2^{2(n-m)}} \right\rfloor \qquad --- (51)$$

It is defined so because it is desirable to determine each value $f^{(m,s)}(i,j)$ automatically to fit in an appropriate place in the destination image as long as each value $f^{(m,s)}(i,j)$ is close to $F^{(m)}(i,j)$. For this reason, there is no need to specify the precise correspondence in detail, and the source image is automatically mapped so that the source image matches the destination image.

[2] Concrete Processing Procedure

The flow of the process utilizing the respective elemental techniques described in [1] will be described.

Fig. 6 is a flowchart of the entire procedure of the base technology. Referring to Fig. 6, a processing using a multiresolutional critical point filter is first performed (S1). A source image and a destination image are then matched (S2). S2 is not indispensable, and other processings such as image recognition may be performed instead, based on the characteristics of the image obtained at S1.

Fig. 7 is a flowchart showing the details of the process at S1 shown in Fig. 6. This process is performed on the assumption that a source image and a destination image are matched at S2. Thus, a source image is first hierarchized using a critical point filter (S10) so as to obtain a series of source hierarchical images. Then, a destination image is hierarchized in the similar manner (S11) so as to obtain a series of destination hierarchical images. The order of S10 and S11 in the flow is arbitrary, and the source image and the destination image can be generated in parallel.

Fig. 8 is a flowchart showing the details of the process at S10 shown in Fig. 7. Suppose that the size of the original source image is $2^n \times 2^n$. Since source hierarchical images are sequentially generated from one with a finer resolution to one with a coarser resolution, the parameter m which indicates the level of resolution to be processed is set to n (S100). Then, critical points are detected from the images $p^{(m,0)}$, $p^{(m,1)}$, $p^{(m,2)}$ and $p^{(m,3)}$ of the m-th level of resolution, using a critical point filter (S101), so that the images $p^{(m-1,0)}$, $p^{(m-1,1)}$, $p^{(m-1,2)}$ and $p^{(m-1,3)}$ of the (m-1)th level are generated (S102). Since m=n here, $p^{(m,0)} = p^{(m,1)} = p^{(m,2)} = p^{(m,3)} = p^{(n)}$ holds and four types of subimages are thus generated from a single source image.

Fig. 9 shows correspondence between partial images of the m-th and those of (m-1)th levels of resolution. Referring to Fig. 9, respective values represent the intensity of respective pixels. $p^{(m,s)}$ symbolizes four images p(m, 0) through $p^{(m,3)}$, and when generating $p^{(m-1,0)}$, $p^{(m,s)}$ is regarded as $p^{(m,0)}$. For example, as for the block shown in Fig. 9, comprising four pixels with their pixel intensity values indicated inside, images $p^{(m-1,0)}$, $p^{(m-1,1)}$, $p^{(m-1,2)}$ and $p^{(m-1,3)}$ acquire "3", "8", "6" and "10", respectively, according to the rules described in [1.2]. This block at the m-th level is replaced at the (m-1)th level by respective single pixels acquired thus. Therefore, the size of the subimages at the (m-1)th level is $2^{m-1} \times 2^{m-1}$.

After m is decremented (S103 in Fig. 8), it is ensured that m is not negative (S104). Thereafter, the process returns to S101, so that subimages of the next level of resolution, i.e., a next coarser level, are generated. The above process is repeated until subimages at m=0 (0-th level) are generated to complete the process at S10. The size of the subimages at the 0-th level is 1 X 1.

Fig. 10 shows source hierarchical images generated at S10 in the case of n=3. The initial source image is the only image common to the four series followed. The four types of subimages are generated independently, depending on the type of a critical point. Note that the process in Fig. 8 is common to S11 shown in Fig. 7, and that destination hierarchical images are generated through the similar procedure. Then, the process by S1 shown in Fig. 6 is completed.

In the base technology, in order to proceed to S2 shown in Fig. 6 a matching evaluation is prepared. Fig. 11 shows the preparation procedure. Referring to Fig. 11, a plurality of evaluation equations are set (S30). Such the evaluation equations include the energy $C_f^{(m,s)}$ concerning a pixel value, introduced in [1.3.2.1], and the energy $D_f^{(m,s)}$ concerning the smoothness of the mapping introduced in [1.3.2.2]. Next, by combining these evaluation equations, a combined evaluation equation is set (S31). Such the combined evaluation equation includes $\lambda C_{(i,j)}^{(m,s)} + D_f^{(m,s)}$. Using η introduced in [1.3.2.2], we have

$$\sum \sum (\lambda C_{(i,j)}^{(m,s)} + \eta E_{0(i,j)}^{(m,s)} + E_{1(i,j)}^{(m,s)}) \quad --- \quad (52)$$

In the equation (52) the sum is taken for each i and j where i and j run through 0, 1,... , $2^m - 1$. Now, the preparation for matching evaluation is completed.

Fig. 12 is a flowchart showing the details of the process of S2 shown in Fig. 6. As described in [1], the source hierarchical images and destination hierarchical images are matched between images having the same level of resolution. In order to detect global corresponding correctly, a matching is calculated in sequence from a coarse level to a fine level of resolution. Since the source and destination hierarchical images are generated by use of the critical point filter, the location and intensity of critical points are clearly stored even at a coarse level. Thus, the result of the global matching is far superior to the conventional method.

Referring to Fig. 12, a coefficient parameter $\eta$ and a level parameter m are set to 0 (S20). Then, a matching is computed between respective four subimages at the m-th level of the source hierarchical images and those of the destination hierarchical images at the m-th level, so that four types of submappings $f^{(m,s)}$ (s=0, 1, 2, 3) which satisfy the BC and minimize the energy are obtained (S21). The BC is checked by using the inherited quadrilateral described in [1.3.3]. In that case, the submappings at the m-th level are constrained by those at the (m-1)th level, as indicated by the equations (17) and (18). Thus, the matching computed at a coarser level of resolution is used in subsequent calculation of a matching. This is a vertical reference between different levels. If m=0, there is no coarser level and the process, but this exceptional process will be described using Fig. 13.

On the other hand, a horizontal reference within the same level is also performed. As indicated by the equation (20) in [1.3.3], $f^{(m,3)}$, $f^{(m,2)}$ and $f^{(m,1)}$ are respectively determined so as to be analogous to $f^{(m,2)}$, $f^{(m,1)}$ and $f^{(m,0)}$. This is because a situation in which the submappings are totally different seems unnatural even though the type of critical points differs so long as the critical points are originally included in the same source and destination images. As can been seen from the equation (20), the closer the submappings are to each other, the smaller the energy becomes, so that the matching is then considered more satisfactory.

As for $f^{(m,0)}$, which is to be initially determined, a coarser level by one is referred to since there is no other submapping at the same level to be referred to as shown in the equation (19). In the experiment, however, a procedure is adopted such that after the submappings were obtained up to $f^{(m,3)}$, $f^{(m,0)}$ is renewed once utilizing the thus obtained subamppings as a constraint. This procedure is equivalent to a process in which s=4 is substituted into the equation (20) and $f^{(m,4)}$ is set to $f^{(m,0)}$ anew. The above process is employed to avoid the tendency in which the degree of association between $f^{(m,0)}$ and $f^{(m,3)}$ becomes too low. This scheme actually produced a preferable result. In addition to this scheme, the submappings are shuffled in the experiment as described in [1.7.1], so as to closely maintain the degrees of association among submappings which are originally determined independently for each type of critical point. Furthermore, in order to prevent the tendency of being dependent on the starting point in the process, the location thereof is changed according to the value of s as described in [1.7].

Fig. 13 illustrates how the submapping is determined at the 0-th level. Since at the 0-th level each sub-image is consitituted by a single pixel, the four submappings $f^{(0,s)}$ is automatically chosen as the identity mapping. Fig. 14 shows how the submappings are determined at the first level. At the first level, each of the sub-images is constituted of four pixels, which are indicated by a solid line. When a corresponding point (pixel) of the point (pixel) x in $p^{(1,s)}$ is searched within $q^{(1,s)}$, the following procedure is adopted.

1. An upper left point a, an upper right point b, a lower left point c and a lower right point d with respect to the point x are obtained at the first level of resolution.
2. Pixels to which the points a to d belong at a coarser level by one, i.e., the 0-th level, are searched. In Fig. 14, the points a to d belong to the pixels A to D, respectively. However, the points A to C are virtual pixels which do not exist in reality.
3. The corresponding points A' to D' of the pixels A to D, which have already been defined at the 0-th level, are plotted in $q^{(1,s)}$. The pixels A' to C' are virtual pixels and regarded to be located at the same positions as the pixels A to C.
4. The corresponding point a' to the point a in the pixel A is regarded as being located inside the pixel A', and the point a' is plotted. Then, it is assumed that the position occupied by the point a in the pixel A (in this case, positioned at the upper right) is the same as the position occupied by the point a' in the pixel A'.
5. The corresponding points b' to d' are plotted by using the same method as the above 4 so as to produce an inherited quadrilateral defined by the points a' to d'.
6. The corresponding point x' of the point x is searched such that the energy becomes minimum in the inherited quadrilateral. Candidate corresponding points x' may be limited to the pixels, for instance, whose centers are included in the inherited quadrilateral. In the case shown in Fig. 14, the four pixels all become candidates.

The above described is a procedure for determining the corresponding point of a given point x. The same processing is performed on all other points so as to determine the submappings. As the inherited quadrilateral is expected to become deformed at the upper levels (higher than the second level), the pixels A' to D' will be positioned apart from one another as shown in Fig. 3.

Once the four submappings at the m-th level are determined in this manner, m is incremented (S22 in Fig. 12). Then, when it is confirmed that m does not exceed n (S23), return to S21. Thereafter, every time the process returns to S21, submappings at a finer level of resolution are obtained until the process finally returns to S21 at which time the mapping $f^{(n)}$ at the n-th level is determined. This mapping is denoted as $f^{(n)}(\eta=0)$ because it has been determined relative to $\eta=0$.

Next, to obtain the mapping with respect to other different $\eta$, $\eta$ is shifted by $\Delta\eta$ and m is reset to zero (S24).

After confirming that new $\eta$ does not exceed a predetermined search-stop value $\eta_{max}$ (S25), the process returns to S21 and the mapping $f^{(n)}$ ($\eta = \Delta\eta$) relative to the new $\eta$ is obtained. This process is repeated while obtaining $f^{(n)}$ ($\eta = i\Delta\eta$) ($i = 0,1,...$) at S21. When $\eta$ exceeds $\eta_{max}$, the process proceeds to S26 and the optimal $\eta=\eta_{opt}$ is determined using a method described later, so as to let $f^{(n)}(\eta=\eta_{opt})$ be the final mapping $f^{(n)}$.

Fig. 15 is a flowchart showing the details of the process of S21 shown in Fig. 12. According to this flowchart, the submappings at the m-th level are determined for a certain predetermined $\eta$. When determining the mappings, the optimal $\lambda$ is defined independently for each submapping in the base technology.

Referring to Fig. 15, s and $\lambda$ are first reset to zero (S210). Then, obtained is the submapping $f^{(m,s)}$ that minimizes the energy with respect to the then $\lambda$ (and, implicitly, $\eta$) (S211), and the thus obtained is denoted as $f^{(m,s)}(\lambda=0)$. In order to obtain the mapping with respect to other different $\lambda$, $\lambda$ is shifted by $\Delta\lambda$. After confirming that new $\lambda$ does not exceed a predetermined search-stop value $\lambda_{max}$ (S213), the process returns to S211 and the mapping $f^{(m,s)}$ ($\lambda = \Delta\lambda$) relative to the new $\lambda$ is obtained. This process is repeated while obtaining $f^{(m,s)}(\lambda = i\Delta\lambda)$ ($i = 0,1,...$). When $\lambda$ exceeds $\lambda_{max}$, the process proceeds to S214 and the optimal $\lambda=\lambda_{opt}$ is determined , so as to let $f^{(n)}(\lambda=\lambda_{opt})$ be the final mapping $f^{(m,s)}$ (S214).

Next, in order to obtain other submappings at the same level, $\lambda$ is reset to zero and s is incremented (S215). After confirming that s does not exceed 4 (S216), return to S211. When s=4, $f^{(m,0)}$ is renewed utilizing $f^{(m,3)}$ as described above and a submapping at that level is determined.

Fig. 16 shows the behavior of the energy $C_f^{(m,s)}$ corresponding to $f^{(m,s)}(\lambda=i\Delta\lambda)$ ($i = 0,1, ...$) for a certain m and s while varying $\lambda$. Though described in [1.4], as $\lambda$ increases, $C_f^{(m,s)}$ normally decreases but changes to increase after $\lambda$ exceeds the optimal value. In this base technology, $\lambda$ in which $C_f^{(m,s)}$ becomes the minima is defined as $\lambda_{opt}$. As observed in Fig. 16, even if $C_f^{(m,s)}$ turns to decrease again in the range $\lambda>\lambda_{opt}$ , the mapping will be spoiled by then and becomes meaningless. For this reason, it suffices to pay attention to the first occurring minima value. $\lambda_{opt}$ is independently determined for each submapping including $f^{(n)}$.

Fig. 17 shows the behavior of the energy $C_f^{(n)}$ corresponding to $f^{(n)}(\eta = i\Delta\eta)$ ($i = 0,1,...$) while varying $\eta$. Here too, $C_f^{(n)}$ normally decreases as $\eta$ increases, but $C_f^{(n)}$ changes to increase after $\eta$ exceeds the optimal value. Thus, $\eta$ in which $C_f^{(n)}$ becomes the minima is defined as $\eta_{opt}$. Fig. 17 can be considered as an enlarged graph around zero along the horizontal axis shown in Fig. 4. Once $\eta_{opt}$ is determined, $f^{(n)}$ can be finally determined.

As described above, this base technology provides various merits. First, since there is no need to detect edges, problems in connection with the conventional techniques of the edge detection type are solved. Furthermore, prior knowledge about objects included in an image is not necessitated, thus automatic detection of corresponding points is achieved. Using the critical point filter, it is possible to preserve intensity and locations of critical points even at a coarse level of resolution, thus being extremely advantageous when applied to the object recognition, characteristic extraction, and image matching. As a result, it is possible to construct an image processing system which significantly reduces manual labors.

Some extensions to or modifications of the above-described base technology may be made as follows:

(1) Parameters are automatically determined when the matching is computed between the source and destination hierarchical images in the base technology. This method can be applied not only to the calculation of the matching between the hierarchical images but also to computing the matching between two images in general.

For instance, an energy $E_0$ relative to a difference in the intensity of pixels and an energy $E_1$ relative to a positional displacement of pixels between two images may be used as evaluation equations, and a linear sum of these equations, i.e., $E_{tot}=\alpha E_0+E_1$, may be used as a combined evaluation equation. While paying attention to the neighborhood of the extrema in this combined evaluation equation, $\alpha$ is automatically determined. Namely, mappings which minimize $E_{tot}$ are obtained for various $\alpha$'s. Among such mappings, $\alpha$ at which $E_{tot}$ takes the minimum value is defined as an optimal parameter. The mapping corresponding to this parameter is finally regarded as the optimal mapping between the two images.

Many other methods are available in the course of setting up evaluation equations. For instance, a term which becomes larger as the evaluation result becomes more favorable, such as $1/E_1$ and $1/E_2$, may be employed. A combined evaluation equation is not necessarily a linear sum, but an n-powered sum (n=2, 1/2, -1, -2, etc.), a polynomial or an arbitrary function may be employed when appropriate.

The system may employ a single parameter such as the above $\alpha$, two parameters such as $\eta$ and $\lambda$ in the base technology or more than two parameters. When there are more than three parameters used, they are determined while changing one at a time.

(2) In the base technology, a parameter is determined in such a manner that a point at which the evaluation equation $C_f^{(m,s)}$ constituting the combined evaluation equation takes the minima is detected after the mapping such that the value of the combined evaluation equation becomes minimum is determined. However, instead of this two-step processing, a parameter may be effectively determined, as the case may be, in a manner such that the minimum value of a combined evaluation equation becomes minimum. In that case, $\alpha E_0+\beta E_1$, for instance, may be taken up as the combined evaluation equation, where α+β=1 is imposed as a constraint so as to equally treat each evaluation equation. The essence of automatic determination of a parameter boils down to determining the parameter such that the energy becomes minimum.

(3) In the base technology, four types of submappings related to four types of critical points are generated at each level of resolution. However, one, two, or three types among the four types may be selectively used. For instance, if there exists only one bright point in an image, generation of hierarchical images based solely on $f^{(m,3)}$ related to a maxima point can be effective to a certain degree. In this case, no other submapping is necessary at the same level, thus the amount of computation relative on s is effectively reduced.

(4) In the base technology, as the level of resolution of an image advances by one through a critical point filter, the number of pixels becomes 1/4. However, it is possible to suppose that one block consists of 3X3 pixels and critical points are searched in this 3X3 block, then the number of pixels will be 1/9 as the level advances by one.

(5) When the source and the destination images are color images, they are first converted to monochrome images, and the mappings are then computed. The source color images are then transformed by using the mappings thus obtained as a result thereof. As one of other methods, the submappings may be computed regarding each RGB component.

[3] Improvements in the base technology

Based on the technology mentioned above, some improvements are made to yield the higher preciseness of matching. Those improvements are thereinafter described.

[3.1] Critical point filters and subimages considering color information

For the effective utilization of the color information in the images, the critical point filters are revised as stated below. First, HIS, which is referred to be closest to human intuition, is introduced as color space, and the formula which is closest to the visual sensitivity of human is applied to the transformation of color into intensity, as follows.

$$H = \frac{\frac{\pi}{2} - \tan^{-1}\left(\frac{2R - G - R}{\sqrt{3(G - B)}}\right)}{2\pi}$$

$$I = \frac{R + G + B}{3}$$

$$S = 1 - \frac{\min(R, G, B)}{3}$$

$$Y = 0.299 \times R + 0.587 \times G + 0.114 \times B \tag{53}$$

Here, the following definition is made, in which the intensity Y and the saturation S at the pixel a are respectively denoted by Y(a) and S(a).

$$\alpha_Y(a,b) = \begin{cases} a \wedge \ (Y(a) \le Y(b)) \\ b \wedge \ (Y(a) > Y(b)) \end{cases}$$

$$\beta_Y(a,b) = \begin{cases} a \wedge \ (Y(a) \ge Y(b)) \\ b \wedge \ (Y(a) < Y(b)) \end{cases}$$

$$\beta_S(a,b) = \begin{cases} a \wedge \ (S(a) \ge S(b)) \\ b \wedge \ (S(a) < S(b)) \end{cases}$$

$$--- \quad (54)$$

Following five filters are prepared by means of the definition described above.

$$p_{(i,j)}^{(m,0)} = \beta_Y(\beta_Y(p_{(2i,2j)}^{(m+1,0)}, p_{(2i,2j+1)}^{(m+1,0)}), \ \beta_Y(p_{(2i+1,2j)}^{(m+1,0)}, p_{(2i+1,2j+1)}^{(m+1,0)}))$$

$$P_{(i,j)}^{(m,1)} = \alpha_Y(\beta_Y(p_{(2i,2j)}^{(m+1,1)}, p_{(2i,2j+1)}^{(m+1,1)}), \beta_Y(p_{(2i+1,2j)}^{(m+1,1)}, p_{(2i+1,2j+1)}^{(m+1,1)}))$$

$$p_{(i,j)}^{(m,2)} = \beta_Y(\alpha_Y(p_{(2i,2j)}^{(m+1,2)}, p_{(2i,2j+1)}^{(m+1,2)}), \ \alpha_Y(p_{(2i+1,2j)}^{(m+1,2)}, p_{(2i+1,2j+1)}^{(m+1,2)}))$$

$$p_{(i,j)}^{(m,3)} = \alpha_Y(\alpha_Y(p_{(2i,2j)}^{(m+1,3)}, p_{(2i,2j+1)}^{(m+1,3)}), \alpha_Y(p_{(2i+1,2j)}^{(m+1,3)}, p_{(2i+1,2j+1)}^{(m+1,3)}))$$

$$p_{(i,j)}^{(m,4)} = \beta_S(\beta_S(p_{(2i,2j)}^{(m+1,4)}, p_{(2i,2j+1)}^{(m+1,4)}), \beta_S(p_{(2i+1,2j)}^{(m+1,4)}, p_{(2i+1,2j+1)}^{(m+1,4)})) \tag{55}$$

The four filters from the top to the fourth in (55) are almost the same as those in the base technology, and the critical point of intensity is preserved with the color information. The last filter preserves the critical point of saturation, with the color information, too.
At each level of the resolution, five types of subimage are generated by these filters. Note that the subimages at the highest level consist with the original image.

$$p_{(i,j)}^{(n,0)} = p_{(i,j)}^{(n,1)} = p_{(i,j)}^{(n,2)} = p_{(i,j)}^{(n,3)} = p_{(i,j)}^{(n,4)} = p_{(i,j)} \tag{56}$$

[3.2] Edge images and subimages

By way of the utilization of the information related to intensity derivation (edge) for matching, the edge detection filter by first order derivative is introduced. This filter can be obtained by convolution integral with a given operator H.

$$p_{(i,j)}^{(n,h)} = Y(p_{(i,j)}) \otimes H_h$$
$$p_{(i,j)}^{(n,v)} = Y(p_{(i,j)}) \otimes H_v \qquad --- \quad (57)$$

In this improved base technology, the operator described below is adopted as H, in consideration of the computing speed.

$$H_h = \frac{1}{4}\begin{bmatrix} 1 & 0 & -1 \\ 2 & 0 & -2 \\ 1 & 0 & -1 \end{bmatrix}$$

$$H_v = \frac{1}{4}\begin{bmatrix} 1 & 2 & 1 \\ 0 & 0 & 0 \\ -1 & -2 & -1 \end{bmatrix} \qquad --- (58)$$

Next, the image is transformed into the multiresolution hierarchy. Because the image generated by the filter has the intensity of which the center value is 0, the most suitable subimages are the mean value images as follows.

$$p_{(i,j)}^{(m,h)} = \frac{1}{4}(p_{(2i,2j)}^{(m+1,h)} + p_{(2i,2j+1)}^{(m+1,h)} + p_{(2i+1,2j)}^{(m+1,h)} + p_{(2i+1,2j+1)}^{(m+1,h)})$$

$$p_{(i,j)}^{(m,v)} = \frac{1}{4}(p_{(2i,2j)}^{(m+1,v)} + p_{(2i,2j+1)}^{(m+1,v)} + p_{(2i+1,2j)}^{(m+1,v)} + p_{(2i+1,2j+1)}^{(m+1,v)}) \qquad --- (59)$$

The images described in (59) are introduced to the energy function for the computing in the "forward stage", that is, the stage in which an initial submapping is derived, as will hereinafter be described in detail.
The magnitude of the edge, i.e., the absolute value is also necessary for the calculation.

$$p_{(i,j)}^{(n,e)} = \sqrt{(p_{(i,j)}^{(n,h)})^2 + (p_{(i,j)}^{(n,v)})^2} \qquad (60)$$

Because this value is constantly positive, the filter of maximum value is used for the transformation into the multiresolutional hierarchy.

$$p_{(i,j)}^{(m,e)} = \beta_Y(\beta_Y(p_{(2I,2J)}^{(m+1,e)}, p_{(2I,2J+1)}^{(m+1,e)}), \beta_Y(p_{(2I+1,2J)}^{(m+1,e)}, p_{(2I+1,2J+1)}^{(m+1,e)})) \qquad (61)$$

The image described in (61) is introduced in the course of determining the order of the calculation in the "forward stage" described later.

[3.3] Computing procedures

The computing proceeds in order from the subimages with the coarsest resolution. The calculation is performed more than once at each level of the resolution due to the five types of subimages. This is referred to as "turn", and the maximum number of times is denoted by t. Each turn is constituted with the energy minimization calculations both in the forward stage mentioned above, and the "refinement stage", that is, the stage in which the submapping is computed again. Fig. 18 shows the flowchart related to the improved part of the computing which determines the submapping at the m-th level.
As shown in the figure, s is set to zero (S40) initially. Then the mapping f(m,s) of the source image to the destination image is computed by the energy minimization in the forward stage (S41). The energy minimized here is the linear sum of the energy C, concerning the value of the corresponding pixels, and the energy D, concerning the smoothness of the mapping.
The energy C is constituted with the energy $C_I$ concerning the intensity difference, which is the same as the energy C in the base technology shown in [1] and [2], the energy $C_c$ concerning the hue and the saturation, and the energy $C_E$ concerning the difference of the intensity derivation (edge). These energies are respectively described as follows.

$$C_I^f(i, j) = |Y(p_{(i,j)}^{(m,\sigma(t))}) - Y(q_{f(i,j)}^{(m,\sigma(t))})|^2$$

$$C_C^f(i, j) = |S(p_{(i,j)}^{(m,\sigma(t))})\cos(2\pi H(p_{(i,j)}^{(m,\sigma(t))})) - S(q_{f(i,j)}^{(m,\sigma(t))})\cos(2\pi H(q_{f(i,j)}^{(m,\sigma(t))}))|^2$$

$$+ |S(p_{(i,j)}^{(m,\sigma(t))})\sin(2\pi H(p_{(i,j)}^{(m,\sigma(t))})) - S(q_{f(i,j)}^{(m,\sigma(t))})\sin(2\pi H(q_{f(i,j)}^{(m,\sigma(t))}))|^2$$

$$C_E^f(i,j) = |p_{(i,j)}^{(m,h)} - q_{f(i,j)}^{(m,h)}|^2 + |p_{(i,j)}^{(m,v)} - q_{f(i,j)}^{(m,v)}|^2 \tag{62}$$

The energy D introduced here is the same as that in the base technology before the improvement, shown above. However, in that technology, only the next pixel is taken into account when the energy $E_1$, which guarantees the smoothness of the images, is derived. On the other hand, the number of the ambient pixels taken into account can be set as a parameter d, in this improved technology.

$$E_0^f(i, j) = \|f(i, j) - (i, j)\|^2$$

$$E_1^f(i, j) = \sum_{i'=i-d}^{i+d} \sum_{j'=j-d}^{j+d} \|(f(i, j) - (i, j)) - (f(i', j') - (i', j'))\|^2 \quad --- \tag{63}$$

In preparation for the next refinement stage, the mapping $g^{(m,s)}$ of the destination image q to the source image p is also computed in this stage.

In the refinement stage (S42), more appropriate mapping $f'^{(m,s)}$ is computed based on the bidirectional mapping, $f^{(m,s)}$ and $g^{(m,s)}$, which is previously computed in the forward stage. The energy minimization calculation for the energy M, which is defined newly, is performed here. The energy M is constituted with the degree of conformation to the mapping g of the destination image to the source image, $M_0$, and the difference from the initial mapping, $M_1$.

$$M_0^{f'}(i, j) = \|g(f'(i, j)) - (i, j)\|^2$$

$$M_1^{f'}(i, j) = \|f'(i, j) - f(i, j)\|^2 \quad --- \tag{64}$$

The mapping $g'^{(m,s)}$ of the destination image q to the source image p is also computed in the same manner, so as not to distort the symmetry.

Thereafter, s is incremented (S43), and when it is confirmed that s does not exceed t (S44), the computation proceeds to the forward stage in the next turn (S41). In so doing, the energy minimization calculation is performed using a substituted $E_0$, which is described below.

$$E_0^f(i,j) = \|f(i,j) - f'(i,j)\|^2 \tag{65}$$

[3.4] Order of mapping calculation

Because the energy concerning the mapping smoothness, $E_1$, is computed using the mappings of the ambient points, the energy depends on whether those points are previously computed or not. Therefore, the total mapping preciseness significantly changes depending on the point from which the computing starts, and the order. So the image of the absolute value of edge is introduced. Because the edge has a large amount of information, the mapping calculation proceeds from the point at which the absolute value of edge is large. This technique can make the mapping extremely precise, in particular, for binary images and the like.

**Advertisement displaying technique**

In the following embodiment, an advertisement displaying technique using the base technology is described.

This technique changes advertisements, which are wired to a billboard, which is in a remote place and equipped with a flat panel display such as LCD, according to the time and the position of the billboard. Here, the billboard in the train, which travels following to the predetermined schedule, is assumed as an embodiment.

Concerning the transportation advertisement in a train, generally, the contract about an advertisement notice is made with an advertiser by a line and period, shows that "October 1st to 7th, ABC line." In this embodiment, the contract concerning the line and the period is subdivided further.

Even if it is the same line, the main passenger type changes with the time and the passage area. Considered this, the following service will be actualized. For example, when the train passes the station that locates near high schools, the advertisements especially for young people are displayed from 15:00 to 18:00, since usually in this time range many high school students go back home by train. In addition, in when many businesspersons are supposed to be in a train, or when the train passes the business districts, the advertisements for businesspersons will be displayed.

Accordingly, the following contract may be made about area and period, such as "(1) area: between A station and D station (2) time: 12:00-15:00 (3) period: December 1st - 7th." The advertisement will be more effective when the advertisement system described above is adopted.

Moreover, the advertisement using the motion picture has been expensive, and it takes long time to produce the advertisement. However, by using the multiresolutional critical point filter proposed in the base technology, it will be easy to produce the advertisement using the motion picture, in respect of both expense and time. Consequently, the many advertisers, which are hesitated at advertisement using motion picture, may adopt the motion picture for their advertisement.

Fig. 19 shows a structure of an advertisement display system 10 that comprises an advertisement distribution apparatus 12 and an advertisement displaying apparatus 40, both units are connected through a communication facility 100.

The advertisement distribution apparatus 12 comprises an advertisement input unit 14, a matching processor 18, a key frame storage 20, a corresponding point storage 22, the distribution controller 24, an advertisement transmitter 26, a timetable 28, and an operation situation acquisition unit 30.

The advertisement input unit 14 inputs key frames, which are the base of reproduction of the motion picture, and conditions of advertisement distribution. The information about the timing, which should display the frame with the key frame inputted, is also inputted.

The inputted key frames and the inputted timing which should display are saved in the key frame storage 20. Moreover, in the matching processor 18, the corresponding point information between key frames is generated, and it is stored at the corresponding point storage 22.

Moreover, the distribution conditions inputted in the advertisement input unit 14 are related to both a key frame and the corresponding point information by the distribution controller 24, and are stored at a timetable 28. The operation situation acquisition unit 30 acquires the present position of a train from the operation situation of a route, and then, notifies the distribution controller 24 of the acquired information. The distribution controller 24 distributes the key frames and the corresponding point information via the advertisement transmitter 26 to the advertisement displaying apparatus 40 with reference to the operation situation and timetable 28.

In the advertisement displaying apparatus 40, the advertisement receiver 42 acquires the key frames and the corresponding point information which are transmitted from the advertisement distribution apparatus 12. Then an intermediate frame generator 44 generates intermediate frames based on them, the motion picture is generated from a key frame and the generated intermediate frame, and a reproduction unit 46 reproduces and displays the motion picture.

Fig. 20 shows the example of a time schedule regarding displaying advertisements in a train. For example, it is described that the advertisement of "OO appliance dealer" is displayed "from 6:00 to 9:00" as the train located in "between A station and D station," and the advertisement of "XX company" is displayed "from 9:00 to 12:00" as the train located in " between D station and G station." The time schedule shown here is an illustration. An advertisement may be displayed on arbitrary time and when a train is in the arbitrary station sections "between D station and G station". The time schedule shown here is an illustration. An advertisement may be displayed on arbitrary time and when a train is in the arbitrary station sections.

Although it assumed distributing an advertisement to the display with which the transporter, such as a train, is equipped in the above embodiment, it is not the meaning restricted to this. For example, an advertisement may be distributed to the billboard with which the wall of a subway is equipped. In addition, an advertisement may be displayed only when a train comes in this case, corresponding to an operation situation.

Moreover, when the billboard is installed in the platform, it is judged whether people exist in the platform. Only when people exist, an advertisement is displayed. Therefore, service of charging an advertiser according to accumulation display time is also considered.

With the form of enforcement, according to time and a passage position, although the timetable of an advertising display is assumed the same by all train, a timetable may change with trains.

Moreover, it is not necessary to restrict to one the advertisement registered into predetermined time, for example, the time zone of "9:00 to 12:00", and so that two or more advertisements may be registered. In this case, the charge is made according to the share of the display time.

In the above embodiment, although the corresponding point information is generated in the advertisement distribution apparatus 12, it is not the meaning restricted to this. The advertisement distribution apparatus 12 may distribute only the key frames, and the corresponding point information and a middle picture may be generated in the advertisement displaying apparatus 40. In this case, the advertisement displaying apparatus 40 is equipped with the matching processor 18 and the corresponding point storage 22. Furthermore, the equipment may be in a transporter equipped with a billboard after the same equipment is equipped with the advertisement distribution apparatus 12 and the advertisement displaying apparatus 40.

Each block in the advertisement displaying apparatus 40 and advertisement distribution apparatus 12 may be implemented with a CPU, memory and an related program loaded in the memory. In Fig. 19, however, the blocks are not divided in terms of hardware and/or software component, but of function. The skilled in the art can therefore understand that many combinations of hardware and software components to achieve the function of each block are possible.

Although the present invention has been described by way of exemplary embodiments, it should be understood that many changes and substitutions may be made by those skilled in the art without departing from the spirit and the scope of the present invention which is defined only by the appended claims.

In so far as the embodiments of the invention described above are implemented, at least in part, using software-controlled data processing apparatus, it will be appreciated that a computer programs providing such software control and a storage medium by which such computer program is stored are envisaged as aspect of the present invention.

**Claims**

1. An advertisement displaying method, comprising:

   accepting input of key frames which are basis of creating motion picture which is displayed on a billboard in a remote place;
   generating corresponding point information used for generating intermediate frames which are inserted between the key frames;
   storing the key frames and the corresponding point information;
   managing distribution of the key frames and the corresponding point information, which are associated to the billboard to which the key frames and the corresponding point information are distributed; and
   distributing the key frames and the corresponding point information to the billboard.

2. The method of claim 1, further comprising acquiring operation situation of transporters, which are scheduled to pass near the billboard,
   wherein said managing distribution decides the key frames and the corresponding point information which are distributed to the billboard according to the operation situation of the transporter.

3. The method of claim 1, wherein said billboard is installed in a transporter, the method
   further comprising acquiring a position of the transporter;
   wherein said managing distribution decides the key frames and the corresponding point information which are distributed to the billboard by associating the position with the key frame and the corresponding point information.

4. The method of claim 3, wherein the managing distribution decides the key frames and the corresponding point information, which are distributed to the billboard, with reference to time in addition to the position of the transporter.

5. The method of claim 1, further comprising:

   receiving on the billboard, the key frames and corresponding point information which are distributed, and
   outputting the key frames and the intermediate frames to the billboard as motion picture advertisement, generating the intermediate frames based on the key frames and the corresponding point information.

6. The method of claim 2, further comprising,
   receiving on the billboard the key frames and corresponding point information which are distributed; and

outputting the key frames and the intermediate frames to the billboard as motion picture advertisement, generating the intermediate frames based on the key frames and the corresponding point information.

**7.** The method of claim 3, further comprising,
receiving on the billboard, the key frames and corresponding point information which are distributed; and
outputting the key frames and the intermediate frames to the billboard as motion picture advertisement, generating the intermediate frames based on the key frames and the corresponding point information.

**8.** The method of claim 4, further comprising,
receiving on the billboard, the key frames and corresponding point information which are distributed, and
outputting the key frames and the intermediate frames to the billboard as motion picture advertisement, generating the intermediate frames based on the key frames and the corresponding point information.

**9.** An advertisement displaying apparatus (10), comprising:

a key frame accepting unit (14) which accepts input of key frames used as basis of creating motion picture which is displayed on a billboard in a remote place;
a corresponding point information generator (18) which generates corresponding point information used for generating intermediate frames which are inserted between the key frames;
a key frame preservation unit (20, 22) which stores the key frames and the corresponding point information;
a distribution manager (24) which associates key frames and corresponding point information with a billboard and manages distribution of the key frames and the corresponding point information; and
a distributor (26) which distributes the key frames and the corresponding point information to the billboard.

**10.** The apparatus (10) of claim 9, further comprising an operation situation acquisition unit (30) which acquires an operation situation of transporters which are scheduled to pass through near the billboard,
wherein the distribution manager (24) decides the key frames and the corresponding point information which are distributed to the billboard according to the operation situation.

**11.** The apparatus (10) of claim 9, wherein the billboard is installed in the transporter and further comprising a position detection unit (30) which acquires the position of the transporter;
wherein the distribution manager (24) decides the key frames and the corresponding point information which are distributed to the billboard by associating the position of the transporter to both the key frames and the corresponding point information.

**12.** The apparatus (10) of claim 11, wherein the distribution manager (24) decides the key frames and the correspondence information which are distributed with reference to the time in addition to the position of the transporter.

**13.** The apparatus (10) of claim 9, further comprising:

a receiver (42) which receives the key frames and the corresponding point information which are distributed; and
an advertisement generator (44, 46) which creates the motion picture from the key frames and the intermediate frames, generating the intermediate frames based on the key frames and the corresponding point information.

**14.** The apparatus (10) of claim 10, further comprising;
a receiver (42) which receives the key frames and the corresponding point information which are distributed;
an advertisement generator (44, 46) which creates the motion picture from the key frames and the intermediate frames, generating the intermediate frames based on the key frames and the corresponding point information.

**15.** The apparatus (10) of claim 11, further comprising;
a receiver (42) which receives the key frames and the corresponding point information which are distributed;
an advertisement generator (44, 46) which creates the motion picture from the key frames and the intermediate frames, generating the intermediate frames based on the key frames and the corresponding point information.

**16.** The apparatus (10) of claim 12, further comprising;
a receiver (42) which receives the key frames and the corresponding point information which are distributed;
an advertisement generator (44,46) which creates the motion picture from the key frames and the intermediate frames, generating the intermediate frames based on the key frames and the corresponding point information.

**17.** A computer program executed by a computer, the program comprising the function of:

accepting input of key frames which are basis of creating motion picture which is displayed on a billboard in a remote place;

generating corresponding point information used for generating intermediate frames which are inserted between the key frames;

managing distribution of the key frames and the corresponding point information, which are associated to the billboard to which the key frames and the corresponding point information are distributed;

distributing the key frames and the corresponding point information to the billboard;

receiving the key frames and the corresponding point information on the billboard; and

outputting the motion picture advertisement which consists of the key frames and the intermediate frames, generating the intermediate frames based on the key frames and the correspondence information.

Fig.1a

Fig.1b

Fig.1c

Fig.1d

Fig.1e

Fig.1f

Fig.1g

Fig.1h

Fig.1i

Fig.1j

Fig.2R

Fig.2A

Fig.2E

Fig.2B

Fig.2D

Fig.2C

Fig. 3

## X Graph

Fig.4

$q^{(m)}_{f^{(m)}(i-1,j-1)}$  $q^{(m)}_{f^{(m)}(i,j-1)}$

$\vec{B}$  $\vec{A}$

$q^{(m)}_{(k,l)}$  $q^{(m)}_{f^{(m)}(i+1,j-1)}$

$q^{(m)}_{f^{(m)}(i-1,j)}$

## Fig.5a

$q^{(m)}_{f^{(m)}(i-1,j-1)}$  $q^{(m)}_{f^{(m)}(i,j-1)}$

$\vec{B}$

$q^{(m)}_{(k,l)}$

$\vec{A}$

$q^{(m)}_{f^{(m)}(i+1,j-1)}$

$q^{(m)}_{f^{(m)}(i-1,j)}$

## Fig.5b

START

↓ S1

MULTI-
RESOLUTIONAL
FILTERING

↓ S2

IMAGE MATCHING

↓

END

## Fig. 6

START S1

↓ S10

HIERARCHIZE
SOURCE IMAGE

↓ S11

HIERARCHIZE
DESTINATION IMAGE

↓

END S1

## Fig. 7

START S10

S100

$m \leftarrow n$

S101

DETECT
CRITICAL POINT

S102

GENERATE M-1
LEVEL IMAGE

S103

$m \leftarrow m-1$

S104

N — $m<0?$ — Y

END S10

Fig. 8

p(m, s)

p(m-1, 0)

p(m-1, 1)

p(m-1, 2)

p(m-1, 3)

Fig. 9

$p^{(3)}$

$p^{(2,0)}$  $p^{(2,1)}$  $p^{(2,2)}$  $p^{(2,3)}$

$p^{(1,0)}$  $p^{(1,1)}$  $p^{(1,2)}$  $p^{(1,3)}$

$p^{(0,0)}$  $p^{(0,1)}$  $p^{(0,2)}$  $p^{(0,3)}$

Fig. 10

START PREPARA-
TION FOR S2

S30

SET TWO OR MORE
EVALUATION EQUATIONS

S31

SET INTEGRAL
EVALUATION EQUATION

END PREPARA-
TION FOR S2

Fig.11

$$\boxed{\text{START S2}}$$

**S20**
$$\begin{array}{l}\eta \leftarrow 0 \\ m \leftarrow 0\end{array}$$

**S21**
COMPUTE
$f^{(m,s)} (\eta = i\Delta\eta)$
AT M LEVEL

**S22**
$$m \leftarrow m+1$$

**S23**
$m > n?$ — N

Y

**S24**
$$\begin{array}{l}\eta \leftarrow \eta + \Delta\eta \\ m \leftarrow 0\end{array}$$

**S25**
$\eta > \eta_{max}?$ — N

Y

**S26**
DETERMINE
$\eta_{opt}$ AND $f^{(n)}$

$$\boxed{\text{END S2}}$$

Fig.12

$p(0, s)$          $q(0, s)$

## Fig.13

$p(1, s)$

$q(1, s)$

## Fig.14

START S21

$s \leftarrow 0$
$\lambda \leftarrow 0$    S210

COMPUTE
$f^{(m,s)} (\lambda = i\Delta\lambda)$    S211

$\lambda \leftarrow \lambda + \Delta\lambda$    S212

S213
$\lambda > \lambda_{max}?$
N    Y

DETERMINE
$\lambda_{opt}$ AND $f^{(m,s)}$    S214

$\lambda \leftarrow 0$
$s \leftarrow s+1$    S215

S16
$s > 4?$
N    Y

END S21

Fig.15

Fig.16

Fig.17

START

$s \leftarrow 0$ — S40

COMPUTE $f^{(m,s)}$ AND $g^{(m,s)}$ (FORWARD STAGE) — S41

COMPUTE $f'^{(m,s)}$ AND $g'^{(m,s)}$ (REFINEMENT STAGE) — S42

$s \leftarrow s+1$ — S43

N — $s > t$? — S44

Y

END

**Fig. 18**

**Fig.19**

| TIME | SECTION | | |
|---|---|---|---|
| | A - D STATION | D - G STATION | G - K STATION |
| 6:00 ⟩ | ○○APPLIANCE DEALER XYZ REAL ESTATE | ○○APPLIANCE DEALER XX COMPANY | ○○APPLIANCE DEALER OX DEPARTMENT STORE |
| 9:00 ⟩ | ABC BANK XYZ REAL ESTATE | XX COMPANY | OX DEPARTMENT STORE |
| 12:00 ⟩ | ○○APPLIANCE DEALER ABC BANK | XX COMPANY | OX DEPARTMENT STORE |
| 15:00 ⟩ | ⟩ | ⟩ | ⟩ |

28

# Fig.20